# EUROPEAN PATENT APPLICATION

(11) **EP 4 319 314 A1**
(43) Date of publication of application: **07.02.2024**
(21) Application number: 21933913.2
(22) Date of filing: 31.03.2021
(51) Int. Cl.: H04W 40/34

(54) **SIGNAL SENDING AND RECEIVING METHOD, SIGNAL SENDING AND RECEIVING APPARATUS, AND COMMUNICATION SYSTEM**

(71) Applicant: FUJITSU LIMITED, Kawasaki-shi, Kanagawa 211-8588 (JP)
(72) Inventor: LU, Yang, Beijing 100022 (CN); YI, Su, Beijing 100022 (CN); JIA, Meiyi, Beijing 100022 (CN); LI, Guorong, Beijing 100022 (CN)
(74) Representative: Haseltine Lake Kempner LLP
(86) International application number: PCT/CN2021/084795
(87) International publication number: WO 2022/205253

(57) **Abstract**

Embodiments of this disclosure provide a method and apparatus for transmitting and receiving a signal and a communication system. The apparatus for transmitting and receiving a signal is applicable to an integrated access and backhaul node (IAB-node), and the apparatus includes: a first processing unit configured to, when a destination BAP address of a first path of the IAB-node is unreachable, change a route of unsuccessfully transmitted first path data or received first path data; and a first transceiving unit configured to, based on the changed route, transmit the unsuccessfully transmitted first path data or received first path data.

## Description

### Technical Field

This disclosure relates to the field of communication technologies.

### Background

Integrated access and backhaul (IAB) enables a function of radio relay in a next generation radio access network (NG-RAN). An integrated access and backhaul node (IAB-node) supports access and backhaul via New Radio (NR). A termination point of NR backhaul at a network side is referred to as an lAB-donor, which denotes a network device (e.g. a gNB) supporting an IAB function.

An IAB-node is connected to an IAB-donor via one or more hops. These multi-hop connections form a directed acyclic graph (DAG) topology with the IAB-donor as a root node. The IAB-donor is responsible for executing centralized resource management, topology management and routing management in an IAB network topology.

The IAB-node supports a function of a gNB-DU (distributed unit), and an IAB-node DU is also referred to as an IAB-DU, which is an end point of a New Radio access (NR access) interface to a terminal equipment (UE) and a next hop IAB-node and is also an end point of an F1 protocol to a gNB-CU (central unit) on the IAB-node. The IAB-DU may serve for a common UE and an IAB child node. The IAB-DU enables functions of a network side device, is connected to a downstream child IAB-node, provides NR air-interface access for UEs and downstream IAB child nodes, and establishes F1 connection to an IAB donor-CU.

In addition to the function of the gNB-DU, the IAB-node also supports some functions of the UE, referred to as an IAB-MT (mobile termination). The IAB-MT includes, for example, a physical layer, layer 2, RRC and NAS functions to be connected to a gNB-DU on another IAB-node or IAB-donor, a gNB-CU on the lAB-donor and a core network. The IAB-MT may support such functions as a LTE physical layer, an access stratum (AS), a radio resource control (RRC) layer and a non-access stratum (NAS), and may be connected to an IAB parent node.

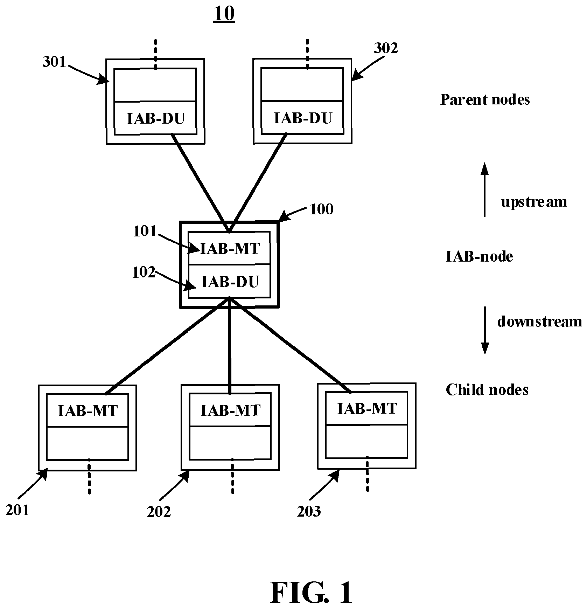

FIG. 1 is a schematic diagram of the IAB topology. As shown in FIG. 1, in an IAB topology 10, an IAB-node 100 includes an IAB-MT functional unit 101 and an IAB-DU functional unit 102, neighboring nodes connected to an interface of the IAB-DU functional unit 102 are referred to as child nodes, such as child nodes 201, 202 and 203 shown in FIG. 1, the IAB-DU functional unit 102 may be in communication with the child nodes 201, 202 and 203 via an air interface (Uu), neighboring nodes connected to an interface of the IAB-MT functional unit 101 are referred to as parent nodes, such as parent nodes 301 and 302 shown in FIG. 1, and the IAB-MT functional unit 101 may be in communication with the parent nodes 301 and 302 via an air interface (Uu).

As shown in FIG. 1, a direction from IAB-node 100 to child nodes 201, 202 and 203 is referred to as a downstream direction, and a direction from IAB-node 100 to parent nodes 301 and 302 is referred to as an upstream direction. And an IAB-donor (not shown) executes centralized resource management, topology management and routing management for the IAB topology 10.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary of the Disclosure

It was found by the inventors that:
during movement of an IAB-node, if it is disconnected from an original parent IAB-node and is connected to a new parent IAB-node, or if an F 1-U transmission path is switched from a CG side to another while the IAB-node maintains dual-connected, network topology changes is produced, thereby affecting routing changes of the IAB-node and its downstream child nodes. Each uplink packet carries a destination BAP address identification, after path transition, a BAP address of a destination DU carried in a header of a backhaul adaptation protocol (BAP) packet transmitted by the IAB-node and child nodes is an address of a destination donor-DU after the transition, and a path identification carried in the header corresponds to a new path identification. However, when the IAB-node is switched or an F1-U transmission path is converted, there may possibly be some data in the IAB-node and its child nodes that are unsuccessfully transmitted, that is, packets carrying the BAP address of the original donor-DU and the original path identification. If the donor-DU is changed after the IAB-node is switched or the F1-U transmission path is converted, uplink data of the original path are unable to reach the original donor-DU. And these uplink data on the original path is dropped by the destination side donor-DU when they are transmitted via the new path, because the carried destination BAP address is inconsistent with a BAP address of the new donor-DU.

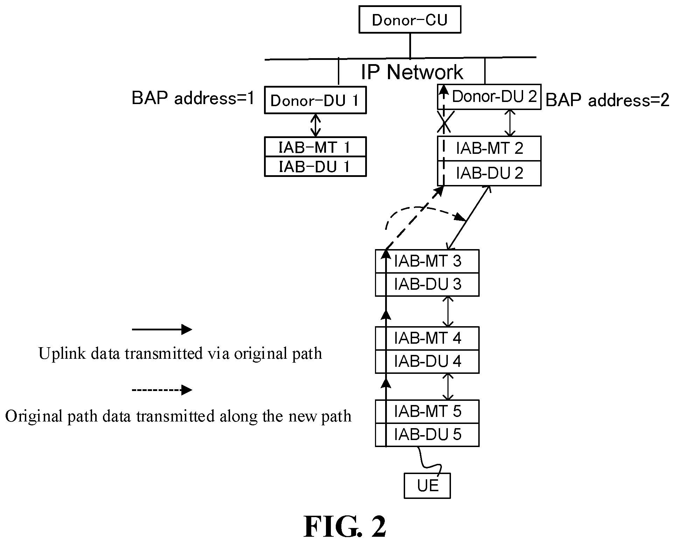

For example, FIG. 2 is a schematic diagram of drop of uplink data. As shown in FIG. 2, when IAB-node 3 is disconnected from its parent node IAB-node 1 and is connected to IAB-node 2, there are original path uplink data in IAB-nodes 3, 4 and 5 that have not been successfully transmitted (the destination BAP address in the BAP header is 1). When the donor-DU of IAB-node is changed (i.e. from donor-DU 1 to donor-DU 2), IAB-node 3 transmits these unsuccessfully transmitted uplink data along a new path, and the uplink data is dropped by the new donor-DU (with a BAP address 2), making them unable to reach the donor-DU.

In order to solve the above problems, embodiments of this disclosure provide a method and apparatus for transmitting and receiving a signal and a communication system, in which when a destination BAP address of a first path of an IAB-node is unreachable, a route is changed for data of the first path that are not successfully transmitted or data of the first path that are received. Hence, data may be transmitted based on the changed route, thereby avoiding loss of data.

According to an aspect of the embodiments of this disclosure, there is provided an apparatus for transmitting and receiving a signal, applicable to an integrated access and backhaul node (IAB-node), the apparatus including:
a first processing unit configured to, when a destination BAP address of a first path of the IAB-node is unreachable, change a route of unsuccessfully transmitted first path data or received first path data; and
a first transceiving unit configured to, based on the changed route, transmit the unsuccessfully transmitted first path data or received first path data.

According to another aspect of the embodiments of this disclosure, there is provided an apparatus for transmitting and receiving a signal, applicable to a child node of an integrated access and backhaul node (IAB-node), the apparatus including:
a second processing unit configured to, when a destination BAP address of a first path of the IAB-node is unreachable, change a route of unsuccessfully transmitted first path data or received first path data; and
a second transceiving unit configured to, based on the changed route, transmit the unsuccessfully transmitted first path data or received first path data.

According to a further aspect of the embodiments of this disclosure, there is provided an apparatus for transmitting and receiving a signal, applicable to a donor centralized unit (donor-CU), the apparatus including:
a third transceiving unit configured to, when a destination BAP address of a first path of an IAB-node is unreachable, transmit a path reconfiguration parameter to an IAB-node or a child node of the IAB-node, wherein the path reconfiguration parameter is used for the IAB-node or the child node to change a route of unsuccessfully transmitted first path data or received first path data.

According to still another aspect of the embodiments of this disclosure, there is provided a method for transmitting and receiving a signal, applicable to an integrated access and backhaul node (IAB-node), the method including:
when a destination BAP address of a first path of the IAB-node is unreachable, changing a route of unsuccessfully transmitted first path data or received first path data; and
based on the changed route, transmitting the unsuccessfully transmitted first path data or received first path data.

According to yet another aspect of the embodiments of this disclosure, there is provided a method for transmitting and receiving a signal, applicable to a child node of an integrated access and backhaul node (IAB-node), the method including:
when a destination BAP address of a first path of the IAB-node is unreachable, changing a route of unsuccessfully transmitted first path data or received first path data; and
based on the changed route, transmitting the unsuccessfully transmitted first path data or received first path data.

According to yet still another aspect of the embodiments of this disclosure, there is provided a method for transmitting and receiving a signal, applicable to a donor centralized unit (donor-CU), the method including:
when a destination BAP address of a first path of an IAB-node is unreachable, transmitting a path reconfiguration parameter to an IAB-node or a child node of the IAB-node, wherein the path reconfiguration parameter is used for the IAB-node or the child node to change a route of unsuccessfully transmitted first path data or received first path data.

An advantage of the embodiments of this disclosure exists in that when a destination BAP address of a first path of the IAB-node is unreachable, a route of unsuccessfully transmitted first path data or received first path data is changed. Hence, data may be transmitted based on the changed route, thereby avoiding loss of data.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments.
FIG. 1 is a schematic diagram of an IAB topology;
FIG. 2 is a schematic diagram of drop of uplink data;
FIG. 3 is a schematic diagram of a change of a network topology resulted from movement of an IAB-node;
FIG. 4 is a schematic diagram of the method for transmitting and receiving a signal of an embodiment of a first aspect of this disclosure;
FIG. 5 is a schematic diagram of performing routing change by the IAB-node and its child node;
FIG. 6 is a schematic diagram of transmitting an end indication by a downstream child node of the IAB-node;
FIG. 7 is a schematic diagram of performing routing change by the IAB-node and its child node in a case where the IAB-node is dual-connected;
FIG. 8 is a schematic diagram of the method for transmitting and receiving a signal of an embodiment of a second aspect of this disclosure;
FIG. 9 is a schematic diagram of the method for transmitting and receiving a signal of an embodiment of a third aspect of this disclosure;
FIG. 10 is a schematic diagram of the apparatus for transmitting and receiving a signal of an embodiment of a fourth aspect of this disclosure;
FIG. 11 is a schematic diagram of the apparatus for transmitting and receiving a signal of an embodiment of a fifth aspect of this disclosure;
FIG. 12 is a schematic diagram of the apparatus for transmitting and receiving a signal of an embodiment of a sixth aspect of this disclosure;
FIG. 13 is a schematic diagram of the network device of an embodiment of this disclosure; and
FIG. 14 is a schematic diagram of the terminal equipment of an embodiment of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and New Radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: Integrated access and backhaul nodes (IAB-node), a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The terminal equipment may be fixed or mobile, and may also be referred to as a mobile station (MS), a terminal, a subscriber station (SS), an access terminal (AT), and a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a LTE, and may include one or more terminal equipments described above.

In the embodiments of this disclosure, higher-layer signaling may be, for example, radio resource control (RRC) signaling; for example, it is referred to an RRC message, which includes MIB, system information, and a dedicated RRC message; or, it is referred to an as RRC IE (RRC information element). Higher-layer signaling may also be, for example, F1-C signaling, or an F1AP protocol; however, this disclosure is not limited thereto.

During movement of an IAB-node, if it is disconnected from an original parent IAB-node and is connected to a new parent IAB-node, a change of routing from the IAB-node and its child nodes to a donor-CU, i.e. a change of network topology, is resulted.

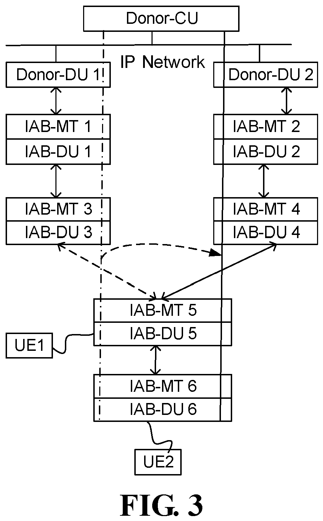

FIG. 3 is a schematic diagram of a change of a network topology resulted from movement of an IAB-node. As shown in FIG. 3, after IAB-node 5 is handed over from a cell under IAB-node 3 to a cell under IAB-node 4, routing from IAB-node 5 and its downstream child node IAB-node6 to a donor-CU is changed.

For a process of update of the network topology when the IAB-node moves in a DU under the same donor-CU, when the IAB-node is handed over, the donor-CU configures the IAB-node with a default backhaul RLC channel (default BH RLC channel) used for a target path of uplink F1-C and non-F 1 data and a default BAP routing identifier (default BAP routing ID) via an RRC reconfiguration message. If the donor-DU is changed after handover, the donor-DU may possibly configure the IAB-node with an IP address that can be routed to the target donor-DU, wherein the default routing ID contains the BAP address and path ID of the target donor-DU. After the IAB-node handed over to a new parent node, the IAB-node starts to apply the above configuration, that is, transferring a transmission path to the target side.

### Embodiment of a first aspect

The embodiment of the first aspect of this disclosure provides a method for transmitting and receiving a signal, applicable to an integrated access and backhaul node (IAB-node).

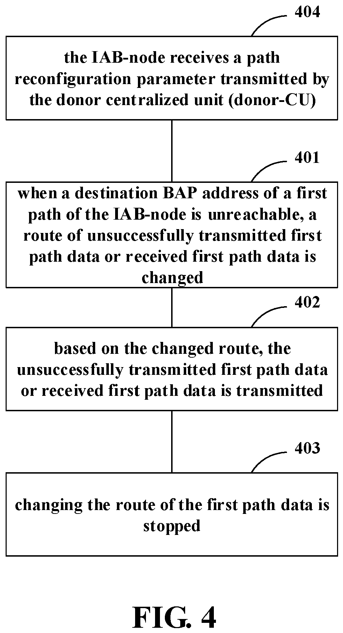

FIG. 4 is a schematic diagram of the method for transmitting and receiving a signal of the embodiment of the first aspect of this disclosure. As shown in FIG. 4, the method includes:
operation 401: when a destination BAP address of a first path of the IAB-node is unreachable, a route of unsuccessfully transmitted first path data or received first path data is changed; and
operation 402: based on the changed route, the unsuccessfully transmitted first path data or received first path data is transmitted.

According to this disclosure, the route of the first path data is changed, thereby transmitting the data based on the changed route, and avoiding loss of data.

In operation 401 of this disclosure, the changing route of the first path data includes: changing a destination BAP address of the first path data into a destination BAP address of a second path, or changing a destination BAP address of the first path data into a destination BAP address of a second path, and changing a path ID of the first path data into a path ID of the second path. The unsuccessfully transmitted first path data are first path data that have been generated or received, but have not been transmitted in buffer or have been transmitted but a correct response from an RLC layer has not been received. If the destination BAP address routed by the first path is unreachable, the IAB-node may change the route of the first path data so that they are transmitted based on the changed route of the second path and reach the donor-CU.

In this disclosure, the first path may be an uplink data transmission path before the IAB-node moves, and the path formed after the route change is the second path.

In operation 402 of this disclosure, the transmitting the first path data includes: transmitting the first path data to a backhaul RLC channel between the IAB-node and a next hop of node of the second path.

When the IAB-node changes the routes of the first path data, it transmits the first path data to the next hop of node under the second path. If the donor-CU has already configured the IAB-node with a relationship of mapping from a backhaul RLC channel or an access RLC channel between a last hop of node and the IAB-node to a backhaul RLC channel between the IAB-node and the next hop of node of the second path, that is, a suitable next hop of RLC channel already exists, the IAB-node may select a backhaul RLC channel for transmitting the first path data according to the relationship of mapping. For example, in a case where the IAB-node has maintained a connection with the next hop of node of the second path, if the above relationship of mapping does not exist, the IAB-node may select any backhaul RLC channel to the next hop of node of the second path to transmit the first path data. And if the IAB-node is not connected to the next hop of node of the second path, the IAB-node needs to transmit the first path data after establishing a connection therewith.

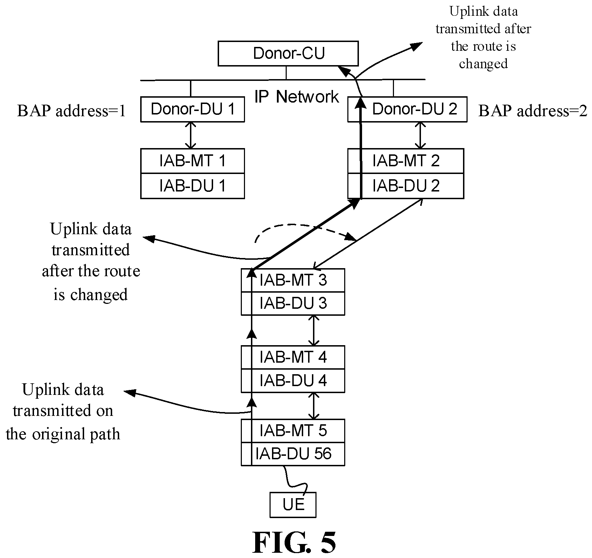

FIG. 5 is a schematic diagram of performing routing change by the IAB-node and its child node.

As shown in FIG. 5, for example, when IAB-node 3 is away from a parent node IAB-node 1 and is connected to IAB-node 2, due to a change in the donor-DU of IAB-node 1, IAB-nodes 3, 4 and 5 reroute original path uplink data (a destination BAP address is 1, and a path identifier is 1, in a BAP packet header) that have not reached IAB-node 1, that is, changing the destination BAP address in the BAP packet header to a new donor-DU address (a BAP address is 2), and transmit the data to a backhaul RLC channel between it and IAB-node 2. In this way, when IAB-node 3 transmits the original path (i.e. a first path) uplink data along the target path (i.e. a second path), the data is not dropped by a donor-DU at the target side (a BAP address is 2).

In at least one embodiment, as shown in FIG. 4, the method may further include:
operation 403: changing the route of the first path data is stopped.

When the IAB-node deems that the first path data have been transmitted, it stops changing the routes of the first path data. In operation 403, changing the routes of the first path data may be stopped under any one of the following conditions:
condition 1: triggering start of a timer by the IAB-node after changing the routes of the first path data, and stopping changing the routes of the first path data after the timer expires; when the timer expires, it is deemed that there exist no data in the IAB-node and the child node, and the routing change may be stopped;
condition 2: stopping changing the routes of the first path data after the unsuccessfully transmitted first path data are transmitted by the IAB-node; if the IAB-node and the child node perform route change simultaneously, the IAB-node and the child node deem that there exist no first path data after transmitting the unsuccessfully transmitted first path data buffered by themselves, and may stop changing the routes; and
condition 3: stopping changing the routes of the first path data after the unsuccessfully transmitted first path data are transmitted by the IAB-node and it is determined that the unsuccessfully transmitted first path data are transmitted by a downstream child node; this condition may be applied to a case where the IAB-node and the child node do not perform route change simultaneously or the child node does not perform route change. In addition to transmitting the first path data that are buffered by the IAB-node itself, it is also needed to ensure that the downstream child node has already transmitted the unsuccessfully transmitted first path data before it is deemed that there exist no first path data.

In condition 3, when the IAB-node receives an end indication transmitted by the downlink child node of the IAB-node, the IAB-node determines that the downlink child node transmits the unsuccessfully transmitted first path data. The end indication may be placed in a header of a BAP data PDU or in a control PDU of the BAP.

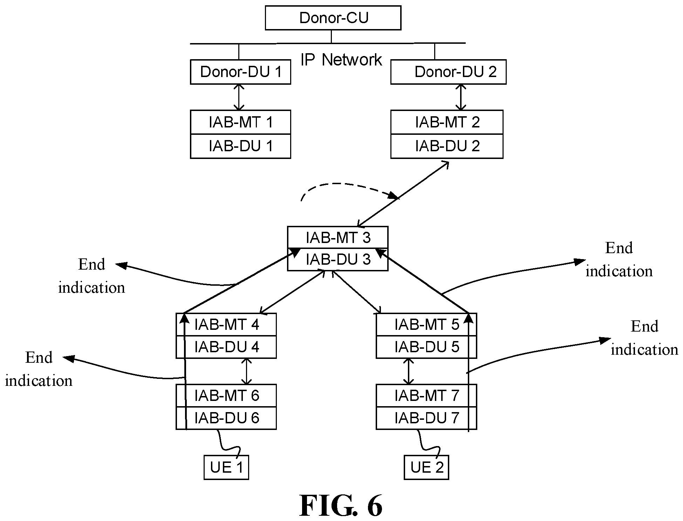

FIG. 6 is a schematic diagram of transmitting the end indication by the downstream child node of the IAB-node. As shown in FIG. 6, each downstream child node of the IAB-node transmits an end indication to its parent node after transmitting successfully transmitted first path data buffered by itself. It should be noted that when the child node receives the end indication from the downstream child node, it does not directly forward, instead, it transmits its own end indication to the parent node after transmitting first path data buffered by itself, or transmits an end indication to the parent node after stopping changing the routes of the first path data.

In at least one embodiment, the situation where the destination BAP address of the first path of the IAB-node is unreachable includes the following situation 1 or 2:
situation 1: the destination BAP address of the first path is unreachable resulted after the IAB-node is handed over to a new parent node; and
situation 2: the destination BAP address of the first path is unreachable resulted after radio link failure occurs in a link between the IAB-node and a first parent node.

In at least one embodiment, as shown in FIG. 4, the method further includes:
operation 404: the IAB-node receives a path reconfiguration parameter transmitted by the donor centralized unit (donor-CU).

The IAB-node is often not configured with routing change related parameters when it is away from its original parent node. For example, if a second path route has not been established or even connection with a next hop of node of the second path has not been established, relevant configuration may be obtained in operation 404, so that the IAB-node performs routing change in operation 401.

In implementation 1 of operation 404, the path reconfiguration parameter may include a destination BAP address and a path identifier of the first path. In this way, if some of the original path data do not require routing changes, or if the IAB-node does not know which original paths need routing changes, the donor-CU may configure paths that the IAB-node needs to perform routing changes.

In implementation 2 of operation 404, the path reconfiguration parameter may include mapping of the destination BAP address of the first path to the destination BAP address of the second path, or may include mapping of the destination BAP address and path identifier of the first path to the destination BAP address and path identifier of the second path, so that different first paths are routed to different donor-DUs by using different second paths, thereby satisfying different QoS requirements of the uplink data.

In implementation 3 of operation 404, the path reconfiguration parameter may include the destination BAP address of the second path, the path identifier of the second path and an identifier of an RLC channel from the IAB-node to a next hop of node of the second path. The destination BAP address of the second path and the path identifier of the second path are used to replace the destination BAP address and path identifier in the BAP header of the first path data. The backhaul RLC channel from the IAB-node to the next hop of node of the second path is an uplink backhaul RLC channel used for transmitting the first path data to the next hop of node of the second path.

In implementation 3 of operation 404, the destination BAP address of the second path is a destination BAP address used for uplink F1-C and non-F1 data, and the path ID of the second path is a path ID used for the uplink F1-C and non-F1 data, or the destination BAP address of the second path is a destination BAP address used for uplink F1-U data, and the path ID of the second path is a path ID used for the uplink F1-U data. Hence, if the IAB-node has been configured with the second path route used for the uplink F1-U data and the non-F1 data, the IAB-node may use the second path route of the uplink F1-U data and the non-F1 data as the route of the first path data; and when the IAB-node is further configured with the second path route used for the uplink F1-U data, the IAB-node may use the second path route of the F1-U data as the route of the first path data.

In implementation 3 of operation 404, the ID of the backhaul RLC channel from the IAB-node to the next hop of node of the second path is: an ID of a backhaul RLC channel used for uplink F1-C and non-F1 data, or an ID of a backhaul RLC channel used for uplink F1-U data. In this way, if the IAB-node is configured with a backhaul RLC channel for the uplink F1-C and non-F1 data, the IAB-node may use the backhaul RLC channel of the F1-C and non-F1 data as a channel for transmitting the first path data. If the IAB-node is further configured with a backhaul RLC channel for the uplink F1-U data, the IAB-node may use the channel of the F1-U data as a channel for transmitting the first path data.

In a first example of implementations 1-3 of operation 404, if the situation where the destination BAP address of the first path is unreachable is situation 1, i.e. the destination BAP address of the first path is unreachable due to the switching of the IAB-node to a new parent node, the path reconfiguration parameter may be transmitted by an RRC reconfiguration message for handover transmitted by the donor-CU, and the IAB-node triggers routing change of the first path data in completing random access to the new parent node.

In a second example of implementations 1-3 of operation 404, if the situation where the destination BAP address of the first path of the IAB-node is unreachable is situation 1, the path reconfiguration parameter may be transmitted from an F1AP message received from the donor-CU after the IAB-node completes handover to the new parent node, and the transmission of the first path data is stopped when the IAB-node is handed over to the new parent node, for example, the IAB-node may stop transmitting a scheduling request (SR) or a buffer size requests (BSR) to the parent node, or stop scheduling an uplink resource grant of the child node. The IAB-node may trigger routing change of the first path data in receiving the F1AP message. As the first path data are unable to reach the destination donor-DU after the IAB-node is handed over, stopping transmitting the first path data immediately after the handover may avoid loss of data.

In a third example of implementations 1-3 of operation 404, if the situation where the destination BAP address of the first path of the IAB-node is unreachable is situation 2, i.e. the destination BAP address of the first path is unreachable due to radio link failure occurring in the link between the IAB-node and the parent node, the path reconfiguration parameter may be transmitted via an RRC reconfiguration message or the F1AP message received from the donor-CU after the IAB-node completes establishment with a new parent node, and transmission of the first path data is stopped when a radio link failure occurs in the link between the IAB-node and the first parent node. For example, the IAB-node may stop transmitting the SR and BSR to the parent node or stop scheduling an uplink resource grant of the child node. The IAB-node triggers routing change of the first path data after receiving the path reconfiguration parameter. As the first path data are unable to reach the destination donor-DU after the link between the IAB-node and the parent node fails, immediately stopping transmitting the first path data may avoid loss of data.

In a fourth example of implementations 1-3 of operation 404, if the situation where the destination BAP address of the first path of the IAB-node is unreachable is situation 2, the path reconfiguration parameter may be transmitted via the F1AP message received from the donor-CU after the IAB-node reports the radio link failure information to the donor-CU, and transmission of the first path data is stopped when a radio link failure occurs in the link between the IAB-node and the first parent node. For example, the IAB-node may stop transmitting the SR and BSR to the parent node or stop scheduling an uplink resource grant of the child node. The IAB-node triggers routing change of the first path data after receiving the F1AP message.

In this disclosure, if a second path route already exists in the IAB-node, routing change may be performed on the first path data without executing operation 404. For example, the IAB-node forms a dual connection with the first parent node and second parent node, wherein a radio link failure occurs in a link between the IAB-node and the first parent node, and no radio link failure occurs in a link between the IAB-node and the second parent node. In this case, the IAB-node triggers routing change of the first path data immediately after an RLF occurs in the link between IAB-node and the first parent node, and a destination BAP address in a BAP packet header of a path passing the first parent node is replaced with a destination BAP address of a path passing the link between the IAB-node and the second parent node, or, a destination BAP address and path identifier are respectively replaced with a destination BAP address and path identifier of the path passing the link between the IAB-node and the second parent node. Hence, the first path is the path passing the link between the IAB-node and the first parent node, and the second path is the path passing the link between the IAB-node and the second parent node.

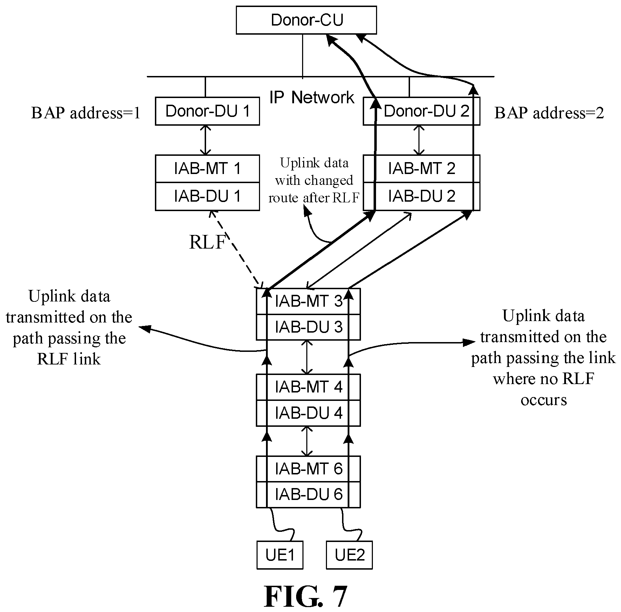

FIG. 7 is a schematic diagram of performing routing change by the IAB-node and its child node in a case where the IAB-node is dual-connected. As shown in FIG. 7, IAB-node 1 and IAB-node 2 are a first parent node and second parent node of IAB-node 3, respectively. An RLF occurs in a link between IAB-node 3 and the first parent node IAB-node 1, no RLF occurs in a link between IAB-node 3 and the second parent node IAB-node 2, and IAB-node 3 and its child node route the first path data to the second path, the second path passing the link where no RLF occurs.

The method for transmitting and receiving a signal in FIG. 4 shall be described below with reference to particular embodiments.

### Embodiment 1

In Embodiment 1, the situation where the destination BAP address of the first path of the IAB-node is unreachable is situation 1 (i.e. the destination BAP address of the first path is unreachable due to the switching of the IAB-node to a new parent node).

In this embodiment, after the IAB-node is handed over, the original donor-DU is different from the target donor-DU. The IAB-node or its child node changes routes of buffered uplink F1 data and uplink F1 data received from the downstream node on the original path (i.e. the first path), and replaces the BAP address of the original donor-DU in the BAP packet header with the BAP address of the target donor-DU (i.e. the destination BAP address of the second path), or replaces the BAP address and original path identifier of the original donor-DU with a target donor-DU address and a target side path (i.e. the second path) identifier, respectively. Furthermore, the IAB-node may transmit the uplink F1 data on the original path to an RLC channel between the IAB-node and a next hop of node of the target side path, thereby transmitting the first path data based on the changed route.

A process of changing routes of buffered uplink F1 data and uplink F1 data received from the downstream node on the original path by the IAB-node shall be described below.

When the IAB-node is handed over to a new parent node, target transmission path parameters for uplink F1-C and non-F1 data are configured by an RRC message transmitted by the donor-CU via the original path, and include a target donor-DU address, a path identifier and an uplink UL BH RLC channel. The donor-CU may configure target side routing for uplink F1-U data via the same RRC message, including a target donor-DU address, a path identifier and a UL BH RLC channel.

The IAB-node may transmit the buffered uplink F1-U data on the original path by using the destination donor-DU address, target side path identifier and uplink UL BH RLC channel of the uplink F1-C and non-F1 data, and may also transmit the uplink data on the original path via the target path parameters for the uplink F1-U data. Or, the donor-CU may specifically change configuration parameters for routes of the uplink data on the original path. In order to identify the uplink data on the original path, the IAB-node may reserve the original destination address and path identifier for a period of time after handover, or the donor-CU may configure a routing identifier of uplink data needing to be rerouted (the original donor-DU address and original path identifier) to the IAB-node.

In order to meet different QoS requirements of the uplink data, uplink data on different original donor-DUs or original paths may need to be routed to different target donor-DUs or transmitted by using different target paths. The donor-CU may configure mapping from the original donor-DU address to the target donor-DU address, or configure mapping from the BAP address of the original donor-DU and original path identifier to the target donor-DU address and target path identifier.

Relevant configuration of the routing change of original path data may be transmitted to the IAB-node via an RRC reconfiguration message during the handover or an F1AP message after the handover is completed.

In this embodiment, an activation method for performing routing change on the original path data by the IAB-node (i.e. a method for triggering the routing change in operation 401) may include:
when the IAB-node has saved the path update configuration, completing random access to the target cell by the IAB-node; or, after handover of the IAB-node is completed, receiving configuration related to changes of the routes of the original path data transmitted via the F1AP message.

In this embodiment, an activation method for performing routing change on the original path data (i.e. executing operation 403) may include:
starting a timer after the routing change of the original path data is activated, and deactivating the routing change of the original path data after the timer expires; or, deactivating the routing change of the original path data after the IAB-node transmits currently buffered unsuccessfully transmitted original path data; or, deactivating the routing change of the original path data after the IAB-node determines that all original path data in the downstream node has been transmitted and transmits currently buffered unsuccessfully transmitted original path data. For example, when the child node deactivates the routing change, it transmits an end indication to the parent node. When the IAB-node receives the end indication, it indicates that all downstream child nodes have transmitted the original path data the routing change is completed.

In addition, in this embodiment, the uplink data generated after the handover is generated according to the target side path, hence, there is no need to update routes the uplink data generated after the handover.

Furthermore, in Embodiment 1, a method for activating routing change of the original path data by the child node includes: in a case where the child node has saved the path update configuration, when a handover success indication message transmitted by the IAB-node after completing random access to the target cell, activating routing change of the original path data; or, when the IAB-node receives configuration related to routing change of the original path data transmitted by donor-CU via an F1AP message after completing handover, activating routing change of the original path data.

In Embodiment 1, a method for deactivating routing change of the original path data by the child node includes: starting a timer after the child node activates the routing change, and deactivating the routing change of the original path data after the timer expires; or, deactivating by the child node after transmitting currently buffered unsuccessfully transmitted original path data; or, deactivating by the child node after determining that all original path data in the downstream node have been transmitted and transmitting all unsuccessfully transmitted original path data.

### Embodiment 2

In Embodiment 2, the situation where the destination BAP address of the first path of the IAB-node is unreachable is situation 2 (i.e. the destination BAP address of the first path is unreachable due to a radio link failure occurring in the link between the IAB-node and the first parent node).

In Embodiment 2, after the IAB-node completes rebuilding, the original donor-DU is different from the target donor-DU.

After the IAB is rebuilt to a new cell, there may be some uplink data on the original path that have not been transmitted to the original parent node, and if these data are directly transmitted via the new path, they may be dropped by the new donor-DU.

The IAB-node or its child node change the routes of buffered uplink F1 data and the uplink F1 data on the original path received from the downstream node, and replaces the BAP address of the original donor-DU in the BAP packet header with a BAP address of a new donor-DU, or replaces the BAP address of the original donor-DU and the original path identifier with a new donor-DU address and a new path identifier, respectively.

When the IAB-node completes rebuilding to the new cell, it changes the routes of the buffered uplink F1 data and the uplink F1 data of the original path received from the downstream node.

In rebuilding, parameters of the new transmission path for the uplink F1-C and non-F1 data include the destination donor-DU address, target side path identifier and uplink LTL BH RLC channel configured by the donor-CU. The donor-CU may configure the parameters of the new transmission path for the uplink F1-U data via the same RRC message. IAB-node may transmit the buffered uplink F1-U data on the original path by using the transmission path parameters of the uplink F1-C and non-F1 data, including the donor-DU address, path identifier and uplink UL BH RLC channel, and may also transmit the uplink on the original path by using the transmission path parameters for F1-U. Or, the donor-CU may specifically change configuration parameters for the routes of the uplink data on the original path. In order to identify the uplink data on the original path, after the rebuilding is successful, the IAB-node may keep the original destination address and path identifier for a period of time, or the donor-CU may configure the IAB-node with an original donor-DU address and original path identifier needing to be rerouted.

In order to meet different QoS requirements of the uplink data, different uplink data may need to be routed to different target donor-DUs or transmitted by using different target paths. The donor-CU may configure mapping from the original donor-DU address to the target donor-DU BAP address, or configure mapping from the BAP address of the original donor-DU and original path identifier to the target donor-DU address and target path identifier.

Relevant configuration of the routing change of original path data may be transmitted to the IAB-node via an RRC reconfiguration message after the rebuilding or an F1AP message after the rebuilding.

After the IAB-node completes access to the new cell, it may stop transmitting uplink data on the original path via the new transmission path, so as to prevent the uplink data from being dropped by the new donor-DU.

In this embodiment, an activation method for performing routing change of data by the IAB-node (i.e. a method for triggering the routing change in operation 401) may include: after rebuilding of the IAB-node is completed, receiving configuration related to changes of the routes of the original path data transmitted via the RRC message or the F1AP message.

In this embodiment, reference may be made to Embodiment 1 for a method for activating routing change of the original path data, which shall not be described herein any further.

Furthermore, in Embodiment 2, a method for activating routing change of the original path data in the process of performing routing change of uplink data on the original path by the child node includes: in a case where the child node has saved path update configuration, such as in a case where the IAB-node is rebuilt to the target cell during handover of the IAB-node, the child node activates the routing change when it receives a successful rebuilding indication message transmitted by the IAB-node after completing random access to the new cell; or, the child node activates the routing change when it receives the configuration related to the routing change of the original path data transmitted by donor-CU.

In Embodiment 2, reference may be made to Embodiment 1 for a method for activating routing change of the original path data by the child node, which shall not be described herein any further.

### Embodiment 3

In Embodiment 3, when the IAB-node rebuilds dual connection, the F1 transmission path is transferred from one cell group (CG) to another CG, such as when an RLF occurs in a BH link between the IAB-node and a parent node of a CG. After an RLF occurs in a path of the IAB-node, there may be some uplink data transmitted via the RLF path that have not yet reached the parent node. If these data are directly transmitted via another path where no RLF occurs, they are dropped by a donor-DU of the other path.

The IAB-node changes the routes of the buffered uplink F1 data and uplink F1 data received from the downstream node and passing the path of the RLF link, and replaces a BAP address of a donor-DU corresponding to the path passing the RLF link in the BAP packet header with a BAP address of a donor-DU corresponding to a path not passing the RLF link, or further replace an identifier of the path passing the RLF link with a BAP address of a path not passing the RLF link.

When an RLF occurs in a connection, the IAB-node may transmit an RLF report to the donor-CU via an RRC message. For example, when an RLF occurs in a master cell group (MCG), master cell group failure information (MCGfailureInformation) is transmitted, and when an RLF occurs in a secondary cell group (SCG), secondary cell group failure information (SCGFailureInformation) is transmitted.

After receiving the RLF report, the donor-CU may configure parameters for the uplink data, i.e. the destination donor-DU address, path identifier and the UL BH RLC channel, and the IAB-node may reroute uplink data of the path passing the RLF link according to the routing change parameters configured by the donor-CU. And the donor-CU may further configure routing identifiers of uplink data needing to be rerouted to the IAB-node.

In order to meet different QoS requirements of the uplink data, different uplink data may need to be routed to different target donor-DUs or transmitted by using different target paths. The donor-CU may configure different routes used by different paths passing the RLF link.

In this embodiment, an activation method for performing route change of the data by the IAB-node (i.e. the method for triggering routing change in operation 401) may include: detecting that an RLF occurs in a link by the IAB-node, or, receiving, by the IAB-node, configuration related to routing changes of the uplink data transmitted by the donor-CU.

In this embodiment, reference may be made to Embodiment 1 for a method for activating routing change of the original path data, which shall not be described herein any further.

In addition, uplink data generated after the F1 transmission path is transferred from one CG to another does not need their routes to be updated, as they are generated according to the new path.

Furthermore, in Embodiment 3, when the IAB-node detects the RLF, it transmits an RLF indication to the child node, the RLF indication including a routing identifier (including a path identifier and a destination BAP address) of the path passing the RLF link. The child node changes routes of the successfully transmitted uplink F1 data and uplink F1 data of the path passing the RLF link received from the downstream node.

The donor-CU be configure relevant parameters for rerouting the RLF path, i.e. the destination BAP address, path identifier and UL BH RLC channel, and the child node reroutes the uplink data of the path where the RLF occurs according to the parameters. The donor-CU may further configure the child node with the routing identifier (including the destination BAP address and path identifier) of uplink F1 data needing to be rerouted.

Moreover, in Embodiment 3, a method for activating route change of the data at the child node includes: activating path data routing change when the child node receives the RLF indication transmitted by the IAB-node, or, activating path data routing change when the child node receives configuration related to rerouting uplink data transmitted by the donor-CU.

In Embodiment 3, reference may be made to Embodiment 1 for a deactivation method of the child node, which shall not be repeated herein any further.

According to the embodiment of the first aspect of this disclosure, routes of the data of the first path are changed, thereby transmitting data based on the changed routes, so as to avoid loss of data.

### Embodiment of a second aspect

At least addressed to the same problem as the embodiment of the first aspect, the embodiment of the second aspect of this disclosure provides a method for transmitting and receiving a signal, which corresponds to the method of the embodiment of the first aspect. The method for transmitting and receiving a signal of the embodiment of the second aspect of this disclosure is applicable to a child node of an integrated access and backhaul node (IAB-node).

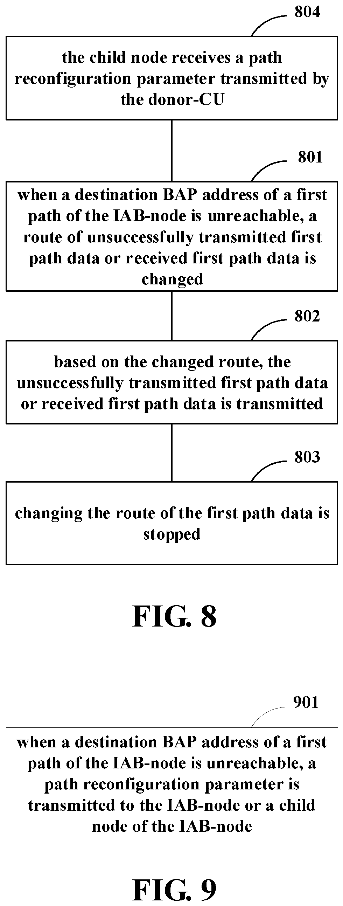

FIG. 8 is a schematic diagram of the method for transmitting and receiving a signal of the embodiment of the second aspect of this disclosure. As shown in FIG. 8, the method includes:
operation 801: when a destination BAP address of a first path of the IAB-node is unreachable, a route of unsuccessfully transmitted first path data or received first path data is changed; and
operation 802: based on the changed route, the unsuccessfully transmitted first path data or received first path data is transmitted.

According to the embodiment of the first aspect of this disclosure, the route of the data of the first path is changed, thereby transmitting data based on the changed routes, so as to avoid loss of data.

In operation 801, the changing routes of the first path data includes:
changing a destination BAP address of the first path data into a destination BAP address of a second path, or, changing a destination BAP address of the first path data into a destination BAP address of a second path, and changing a path ID of the first path data into a path ID of the second path.

In operation 802, the transmitting the first path data includes: transmitting the first path data to a backhaul RLC channel between the child node and a next hop of node of the second path.

Change the destination BAP address of the first path data to the destination BAP address of the second path; or, change the destination BAP address of the first path data to the destination BAP address of the second path, and change the path identifier of the first path data to the path identifier of the second path.

In operation 802, the first path data is transmitted, including: transmitting the first path data to a backhaul RLC channel between the child node and the next hop of node of the second path.

When the child node changes the routes of the first path data, it transmits the first path data to the next hop of node under the second path. If the donor-CU has already configured the child node with a relationship of mapping from a backhaul RLC channel or access RLC channel between a last hop of node and the child node to a backhaul RLC channel of a next hop of node of the second path, that is, a suitable next hop of RLC channel already exists, the child node may select to transmit the RLC channel of the first path data according to the relationship of mapping. For example, in a case where the child node keeps a connection with the next hop of node of the second path, if the above relationship of mapping does not exist, the child node may select any backhaul RLC channel to the next hop of node of the second path to transmit the first path data, and if the child node is not connected to the next hop of node of the second path, the IAB-node needs to establish a connection with it before transmitting the first path data.

In this embodiment, that a destination BAP address of a first path of the IAB-node is unreachable includes situation 1 or situation 2 below:
situation 1: the destination BAP address of the first path of the IAB-node is unreachable due to the switching of the IAB-node to a new parent node; and
situation 2: the destination BAP address of the first path of the IAB-node is unreachable due to a radio link failure occurring in a link between the IAB-node and a first parent node.

As shown in FIG. 8, the method further includes:
operation 803: changing the route of the first path data is stopped.

When the child node deems that the first path data have been transmitted, it stops changing the routes of the first path data. In at least one embodiment, operation 803 may be executed when any one of the following conditions is satisfied:
condition 1: the child node starts the timer after triggering routing change of the first path data, and stops routing change of the first path data after the timer expires; and when the timer expires, it is deemed that the first path data do not exist in the child node and its downstream node, and the routing change may be stopped;
condition 2: the child node stops changing the routes of the first path data after transmitting the unsuccessfully transmitted first path data; and if the child node and its downstream child node perform routing change simultaneously, the child node and its downstream child node deem that the first path data do not exist in the child node and its downstream child node after transmitting unsuccessfully transmitted first path data that are buffered by themselves, and may stop routing change; and
condition 3: in a case where the child node transmits the unsuccessfully transmitted first path data and determines that the downstream child node have transmitted the unsuccessfully transmitted first path data, the child node stops changing the routes of the first path data. This condition may be applied to a case where the child node and its downstream child node do not perform routing change simultaneously or its downstream child node does not perform routing change, and the child node deems rerouting of the first path data is needed no longer only when it ensures that its downstream child node has transmitted the unsuccessfully transmitted first path data, in addition to transmitting first path data that are buffered by itself. For example, when the child node receives the end indication transmitted by the downstream child node of the child node, it may determine that its downstream child node has transmitted the unsuccessfully transmitted first path data.

As shown in FIG. 8, the method further includes:
operation 804: the child node receives a path reconfiguration parameter transmitted by the donor-CU.

The child node is often not configured with parameters related to routing change when it is away from the original parent node, for example, second path routing is not established in the child node, hence, related configuration may be obtained in operation 804.

In implementation 1 of operation 804, the path reconfiguration parameter includes the destination BAP address and path identifier of the first path. Hence, if some of the original path data do not need routing change, or in a case where the child node does not know which original paths need routing change, the donor-CU may configure paths needing the child node to perform routing change.

In implementation 2 of operation 804, the path reconfiguration parameter includes mapping between the destination BAP address of the first path and the destination BAP address of the second path, or include mapping between the destination BAP address and path identifier of the first path and the destination BAP address and path identifier of the second path. Hence, different first paths may be routed by using different second paths and routed to different donor-CUs, thereby meeting different QoS requirements of the uplink data.

In implementation 3 of operation 804, the path reconfiguration parameter includes the destination BAP address of the second path, the path identifier of the second path and an identifier of a backhaul RLC channel from the child node to a next hop of node of the second path. The destination BAP address of the second path and the path identifier of the second path are used for replacing the destination BAP address and the path identifier in the BAP packet header of the first path data, and the backhaul RLC channel from the child node to the next hop of node of the second path is an uplink backhaul RLC channel used for transmitting the first path data to the next hop of node of the second path.

In implementation 3 of operation 804, the destination BAP address of the second path is a destination BAP address used for uplink F1-C and non-F1 data, and the path identifier of the second path is a path identifier used for the uplink F1-C and non-F1 data; or, the destination BAP address of the second path is a destination BAP address used for the uplink F1-U data, and the path identifier of the second path is a path identifier used for the uplink F1-U data. Hence, if the second path routing for the uplink F1-C and non-F1 data is already configured in the child node, the second path routing of the F1-C and non-F1 data may be used as the routing of the first path data; and when the child node is further configured with second path routing for the uplink F1-U data, the second path routing of the F1-U data may be used as the routing for the first path data.

In implementation 3 of operation 804, the backhaul RLC channel identifier to the next hop of node of the second path is an RLC channel identifier used for the uplink F1-C and non-F1 data, or, an RLC channel identifier used for the uplink F1-C data. Hence, if the child node is configured with the RLC channel identifier used for the uplink F1-C and non-F1 data, the RLC channel identifier used for the uplink F1-C and non-F1 data may be used as a channel for transmitting the first path data; and if the child node is further configured with the RLC channel identifier used for the uplink F1-C data, the RLC channel identifier used for the uplink F1-C data may be used as the channel for transmitting the first path data.

In a first example of implementations 1-3 of operation 804, if the situation where the destination BAP address of the first path is unreachable is situation 1, i.e. the destination BAP address of the first path is unreachable due to the switching of the IAB-node to a new parent node, the path reconfiguration parameter may be transmitted by an RRC reconfiguration message before handover of the IAB-node, and the child node triggers routing change of the first path data when it receives a handover success indication transmitted by the IAB-node after completing random access to the new parent node.

In a second example of implementations 1-3 of operation 804, if the situation where the destination BAP address of the first path of the IAB-node is unreachable is situation 1, the path reconfiguration parameter may be transmitted from an F1AP message received from the donor-CU after the IAB-node completes handover, and the transmission of the first path data is stopped when the child node receives a handover success indication transmitted by the IAB-node after completing random access to the new parent node, for example, the child node may stop transmitting an SR or an BSR, or stop scheduling an uplink resource grant of the downstream node. The child node may trigger routing change of the first path data in receiving the F1AP message. As the first path data are unable to reach the destination donor-DU after the IAB-node is handed over, stopping transmitting the first path data immediately after the handover of the IAB-node may avoid loss of data.

In a third example of implementations 1-3 of operation 804, if the situation where the destination BAP address of the first path of the IAB-node is unreachable is situation 2, i.e. the destination BAP address of the first path is unreachable due to radio link failure occurring in the link between the IAB-node and the parent node, the path reconfiguration parameter may be transmitted via an RRC reconfiguration message transmitted by the donor-CU after a radio link failure occurs in the IAB-node, and the child node triggers routing change of the first path data when it receives a reestablishment success indication transmitted by the IAB-node after completing random access to the new parent node. As the child node has saved the parameters related to routing change when the IAB-node complete random access, the child node may immediately trigger routing change of the first path data.

In a fourth example of implementations 1-3 of operation 804, if the situation where the destination BAP address of the first path of the IAB-node is unreachable is situation 2, the path reconfiguration parameter may be transmitted from the RRC reconfiguration message or F1AP message received from the donor-CU after the IAB-node completes reestablishment to the new parent node, and the child node stops transmitting the first path data when it receives a reestablishment success indication transmitted by the IAB-node after completing random access to the new parent node. For example, the child node may stop transmitting an SR or a BSR to the parent node, or stop scheduling an uplink resource grant of the downstream node. The child node triggers routing change of the first path data after receiving the path reconfiguration parameter. As the first path data are unable to reach the destination donor-DU after the IAB-node is reestablished to the new parent node, stopping transmitting the first path data immediately after the reestablishment of the IAB-node may avoid loss of data.

In a fifth example of implementations 1-3 of operation 804, if the situation where the destination BAP address of the first path of the IAB-node is unreachable is situation 2, the path reconfiguration parameter may be transmitted from the F1AP message received from the donor-CU after the IAB-node reports radio link failure information to the donor-CU, and the child node stops transmitting the first path data when it receives an RLF indication transmitted by the IAB-node when a radio link failure occurs in a link between the IAB-node and the first parent node, and the child node triggers routing change of the first path data in receiving the F1AP message.

In addition, in at least one embodiment, if a second path route already exists in the child node, routing change may be performed on the first path data while executing operation 804. For example, the IAB-node forms a dual connection with the first parent node and second parent node, wherein a radio link failure occurs in a link between the IAB-node and the first parent node, and no radio link failure occurs in a link between the IAB-node and the second parent node. In this case, the child node triggers routing change of the first path data immediately after the child node receives an RLF indication occurs transmitted when a radio link failure (RLF) occurs in the link between IAB-node and the first parent node, and a destination BAP address in a BAP packet header of a path passing the link between IAB-node and the first parent node is replaced with a destination BAP address of a path passing the link between the IAB-node and the second parent node, or, a destination BAP address and path identifier are respectively replaced with a destination BAP address and path identifier of the path passing the link between the IAB-node and the second parent node. Hence, the first path is the path passing the link between the IAB-node and the first parent node, and the second path is the path passing the link between the IAB-node and the second parent node. Hence, when an RLF occurs in the IAB-node, the child node may learn which paths are affected by the RLF and need routing change.

In the embodiment of the second aspect, reference may be made to the explanations of embodiments 1 to 3 in the embodiment of the first aspect for examples of the behaviors of the child node.

According to the embodiment of the second aspect of this disclosure, routing change is performed on the first path data. Hence, the child node may transmit the data based on the changed route, thereby avoiding loss of data.

### Embodiment of a third aspect

At least addressed to the same problem as the embodiment of the first aspect, the embodiment of the third aspect of this disclosure provides a method for transmitting and receiving a signal, which corresponds to the method of the embodiment of the first aspect. The method for transmitting and receiving a signal of the embodiment of the third aspect of this disclosure is applicable to a donor centralized unit (donor-CU) of an integrated access and backhaul node (IAB-node).

FIG. 9 is a schematic diagram of the method for transmitting and receiving a signal of an embodiment of a third aspect of this disclosure. As shown in FIG. 9, the method includes:
operation 901: when a destination BAP address of a first path of the IAB-node is unreachable, a path reconfiguration parameter is transmitted to the IAB-node or a child node of the IAB-node.

In operation 901, the path reconfiguration parameter is used for the IAB-node or the child node to change routes of unsuccessfully transmitted first path data or received first path data.

According to the embodiment of the third aspect of this disclosure, the IAB-node or its child node may change the route of the first path data by using the path reconfiguration parameter. Hence, the IAB-node or its child node may transmit the data based on the changed route, so as to avoid loss of data.

In at least one embodiment, the situation where the destination BAP address of the first path of the IAB-node is unreachable includes the following situation 1 or 2:
situation 1: the destination BAP address of the first path is unreachable resulted after the IAB-node is handed over to a new parent node; and
situation 2: the destination BAP address of the first path is unreachable resulted after radio link failure occurs in a link between the IAB-node and a first parent node.

In implementation 1 of operation 901, the path reconfiguration parameter includes a destination BAP address and a path identifier of the first path.

In implementation 2 of operation 901, the path reconfiguration parameter includes a mapping between the destination BAP address of the first path data and the destination BAP address of the second path, or include a mapping between the destination BAP address and the path ID of the first path data and the destination BAP address and the path ID of the second path.

In implementation 3 of operation 901, the path reconfiguration parameter includes the destination BAP address of the second path, the path ID of the second path and an ID of a backhaul RLC channel between the IAB-node and a next hop of node of the second path, wherein the destination BAP address of the second path is a destination BAP address used for uplink F1-C and non-F1 data, and the path ID of the second path is a path ID used for the uplink F1-C and non-F1 data, or the destination BAP address of the second path is a destination BAP address used for uplink F1-U data, and the path ID of the second path is a path ID used for the uplink F1-U data.

In implementation 3 of operation 901, an ID of the backhaul RLC channel to the next hop of node of the second path is: an ID of a backhaul RLC channel used for uplink F1-C and non-F1 data, or an ID of a backhaul RLC channel used for uplink F1-U data.

In a first example of implementations 1-3 of operation 901, when the situation where the destination BAP address of the first path is unreachable is situation 1 (i.e. the destination BAP address of the first path is unreachable due to the switching of the IAB-node to a new parent node), the donor-CU transmits an RRC reconfiguration message containing the path reconfiguration parameter to the IAB-node or the child node before the IAB-node is handed over, or, the donor-CU transmits an F1 AP message containing the path reconfiguration parameter to the IAB-node or the child node after the IAB-node is handed over to the new parent node.

In a second example of implementations 1-3 of operation 901, when the situation where the destination BAP address of the first path is unreachable is situation 1, the donor-CU transmits an RRC reconfiguration message or F1 AP message containing the path reconfiguration parameter to the IAB-node or the child node after the IAB-node reports radio link failure information to the donor-CU.

In a third example of implementations 1-3 of operation 901, when the situation where the destination BAP address of the first path is unreachable is situation 2 (i.e. the destination BAP address of the first path is unreachable due to a radio link failure occurring in a link between the IAB-node and a first parent node, the donor-CU transmits an RRC reconfiguration message containing the path reconfiguration parameter or an F1AP message to the child node after the IAB-node completes reestablishment to a new parent node.

In a fourth example of implementations 1-3 of operation 901, when the situation where the destination BAP address of the first path is unreachable is situation 2, the donor-CU transmits an RRC reconfiguration message containing the path reconfiguration parameter to the child node before the radio link failure occurs in the IAB-node.

In the embodiment of the third aspect, reference may be made to the explanations of embodiments 1 to 3 in the embodiment of the first aspect for examples of the behaviors of the child node.

According to the embodiment of the third aspect of this disclosure, the IAB-node or its child node may perform routing change on the first path data by using the routing reconfiguration parameter. Hence, the IAB-node or its child node may transmit the data based on the changed route, thereby avoiding loss of data.

### Embodiment of a fourth aspect

The embodiment of this disclosure provides an apparatus for transmitting and receiving a signal. The apparatus may be, for example, an integrated access and backhaul node, or may be one or some components of assemblies configured in the integrated access and backhaul node. The integrated access and backhaul node may be, for example, IAB-node 3 in FIG. 5, and correspond to the method in the embodiment of the first aspect.

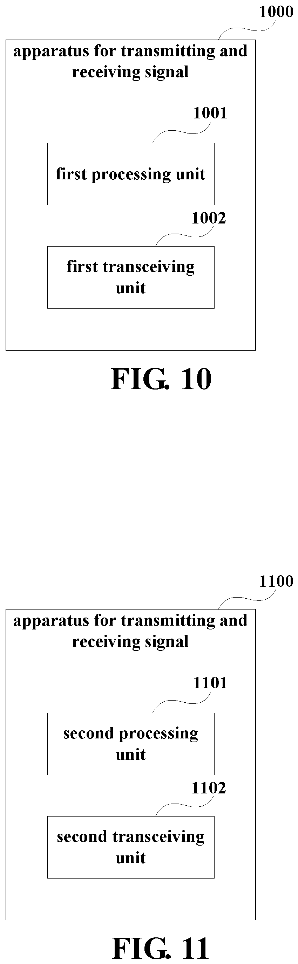

FIG. 10 is a schematic diagram of the apparatus for transmitting and receiving a signal of the embodiment of the fourth aspect of this disclosure. As shown in FIG. 10, an apparatus 1000 for transmitting and receiving a signal includes:
a first processing unit 1001 configured to, when a destination BAP address of a first path of the IAB-node is unreachable, change routes of unsuccessfully transmitted first path data or received first path data; and
a first transceiving unit 1002 configured to, based on the changed routes, transmit the unsuccessfully transmitted first path data or received first path data. In at least one embodiment, the changing routes of the first path data includes:
   changing a destination BAP address of the first path data into a destination BAP address of a second path, or
   changing a destination BAP address of the first path data into a destination BAP address of a second path, and changing a path ID of the first path data into a path ID of the second path.

The transmitting the first path data includes:
transmitting the first path data to a backhaul RLC channel between the IAB-node and a next hop of node of the second path.

In at least one embodiment, that a destination BAP address of a first path of the IAB-node is unreachable includes that:
the destination BAP address of the first path of the IAB-node is unreachable due to the switching of the IAB-node to a new parent node, or the destination BAP address of the first path of the IAB-node is unreachable due to a radio link failure occurring in a link between the IAB-node and a first parent node.

In at least one embodiment, the first processing unit 1001 further performs the following operations:
triggering start of a timer after changing the routes of the first path data, and stopping changing the routes of the first path data after the timer expires, or
stopping changing the routes of the first path data after the unsuccessfully transmitted first path data are transmitted, or
stopping changing the routes of the first path data after the unsuccessfully transmitted first path data are transmitted and it is determined that the unsuccessfully transmitted first path data are transmitted by a downstream child node.

In at least one embodiment, when the IAB-node receives an end indication transmitted by the downlink child node, the first processing unit 1001 determines that the downlink child node transmits the unsuccessfully transmitted first path data.

In at least one embodiment, in the case where the destination BAP address of the first path is unreachable resulted after radio link failure occurs in a link between the IAB-node and a first parent node, the second path is a path passing a link between the IAB-node and a second parent node, wherein no radio link failure occurs in the link between the IAB-node and the second parent node.

In at least one embodiment, after the radio link failure (RLF) occurs in the link between the IAB-node and the first parent node, the first processing unit 1001 triggers the IAB-node to change routes of the first path data.

In at least one embodiment, the first transceiving unit 1002 further receives a path reconfiguration parameter transmitted by the donor-CU, the path reconfiguration parameter including the destination BAP address and the path identifier of the first path data.

In at least one embodiment, the first transceiving unit 1002 further receives a path reconfiguration parameter transmitted by the donor-CU, the path reconfiguration parameter including the destination BAP address of the second path and the path ID of the second path, or including an ID of the backhaul RLC channel between the IAB-node and the next hop of node of the second path.

In at least one embodiment, the first transceiving unit 1002 further receives a path reconfiguration parameter transmitted by the donor-CU, the path reconfiguration parameter including the destination BAP address of the second path, the path ID of the second path and an ID of the backhaul RLC channel between the IAB-node and the next hop of node of the second path.

In at least one embodiment, the destination BAP address of the second path is a destination BAP address used for uplink F1-C and non-F1 data, and the path ID of the second path is a path ID used for the uplink F1-C and non-F1 data, or, the destination BAP address of the second path is a destination BAP address used for uplink F1-U data, and the path ID of the second path is a path ID used for the uplink F1-U data.

In at least one embodiment, the ID of the backhaul RLC channel between the IAB-node and the next hop of node of the second path is:
an ID of a backhaul RLC channel used for the F1-C and non-F1 data, or an ID of a backhaul RLC channel used for uplink F1 data.

In at least one embodiment, in the case where the destination BAP address of the first path is unreachable due to the switching of the IAB-node to the new parent node,
the path reconfiguration parameter is transmitted by an RRC reconfiguration message for handover transmitted by the donor-CU, wherein when the IAB-node completes handover to the new parent node, the first processing unit 1001 triggers routing change of the first path data.

In at least one embodiment, in the case where the destination BAP address of the first path is unreachable due to the switching of the IAB-node to the new parent node, the path reconfiguration parameter is transmitted from an F1AP message received from the donor-CU after the IAB-node completes handover to the new parent node, wherein when the IAB-node is handed over to the new parent node, the first transceiving unit 1002 stops transmitting the first path data, and when the IAB-node receives the F1AP message, the first processing unit 1001 triggers routing change of the first path data.

In at least one embodiment, in the case where the destination BAP address of the first path is unreachable due to a radio link failure occurring in a link between the IAB-node and a first parent node, the path reconfiguration parameter is transmitted from an RRC reconfiguration message or F1 AP message received by the donor-CU after the IAB-node completes reestablishment to the new parent node, wherein the first transceiving unit 1002 stops transmitting the first path data when a radio link failure occurs in the link between the IAB-node and the first parent node, and after the first transceiving unit 1002 receives the path reconfiguration parameter, the first processing unit 1001 triggers changing the routes of the first path data.

In at least one embodiment, in the case where the destination BAP address of the first path is unreachable due to a radio link failure occurring in a link between the IAB-node and a first parent node, the path reconfiguration parameter may be transmitted from the F1AP message received from the donor-CU after the IAB-node reports radio link failure information to the donor-CU, wherein,
when the radio link failure occurs in the link between the IAB-node and the first parent node, the first transceiving unit 1002 stops transmitting the first path data, and when the first transceiving unit 1002 receives the F1AP message, the first processing unit 1001 triggers changing the routes of the first path data.

According to the embodiment of the fourth aspect of this disclosure, routing change is performed on the first path data, thereby transmitting the data based on the changed route, and avoiding loss of data.

### Embodiment of a fifth aspect

The embodiment of this disclosure provides an apparatus for transmitting and receiving a signal. The apparatus may be, for example, a child node of an integrated access and backhaul node, or may be one or some components of assemblies configured in the child node. The integrated access and backhaul node may be, for example, IAB-node 3 in FIG. 5, and correspond to the method in the embodiment of the second aspect.

FIG. 11 is a schematic diagram of the apparatus for transmitting and receiving a signal of the embodiment of the fifth aspect of this disclosure. As shown in FIG. 11, an apparatus 1100 for transmitting and receiving a signal includes:
a second processing unit 1101 configured to, when a destination BAP address of a first path of the IAB-node is unreachable, change routes of unsuccessfully transmitted first path data or received first path data; and
a second transceiving unit 1102 configured to, based on the changed routes, transmit the unsuccessfully transmitted first path data or received first path data.

In at least one embodiment, the changing routes of the first path data includes:
changing a destination BAP address of the first path data into a destination BAP address of a second path, or
changing a destination BAP address of the first path data into a destination BAP address of a second path, and changing a path ID of the first path data into a path ID of the second path.

In at least one embodiment, the transmitting the first path data includes:
transmitting the first path data to a backhaul RLC channel between the child node and a next hop of node of the second path.

In at least one embodiment, that a destination BAP address of a first path of the IAB-node is unreachable includes that:
the destination BAP address of the first path of the IAB-node is unreachable due to the switching of the IAB-node to a new parent node, or
the destination BAP address of the first path of the IAB-node is unreachable due to a radio link failure occurring in a link between the IAB-node and a first parent node.

In at least one embodiment, the second processing unit 1101 further performs the following operations:
triggering start of a timer after changing the routes of the first path data, and stopping changing the routes of the first path data after the timer expires, or
stopping changing the routes of the first path data after the unsuccessfully transmitted first path data are transmitted, or
stopping changing the routes of the first path data after the unsuccessfully transmitted first path data are transmitted and it is determined that the unsuccessfully transmitted first path data are transmitted by a downstream child node.

In at least one embodiment, upon receiving an end indication transmitted by a downstream child node of the child node, the second processing unit 1101 determines that the downstream child node completes in transmission of the unsuccessfully transmitted first path data

In at least one embodiment, in the case where the destination BAP address of the first path is unreachable due to a radio link failure occurring in a link between the IAB-node and a first parent node, the second path is a path passing a link between the IAB-node and a second parent node, wherein no radio link failure occurs in the link between the IAB-node and the second parent node.

In at least one embodiment, when the second transceiving unit 1102 receives a radio link failure (RLF) indication transmitted when the radio link failure occurs in the link between the IAB-node and the first parent node, the second processing unit 1101 triggers the child node to change the routes of the first path data.

In at least one embodiment, the RLF indication contains the destination BAP address and path ID of the first path.

In at least one embodiment, the second transceiving unit 1102 further receives path reconfiguration parameter transmitted by the donor-CU, the path reconfiguration parameter including the destination BAP address and path ID of the first path.

In at least one embodiment, the second transceiving unit 1102 further receives path reconfiguration parameter transmitted by the donor-CU, the path reconfiguration parameter including mapping between the destination BAP address of the first path and the destination BAP address of the second path, or including mapping between the destination BAP address and path identifier of the first path and the destination BAP address and path identifier of the second path.

In at least one embodiment, the second transceiving unit 1102 further receives path reconfiguration parameter transmitted by the donor-CU, the path reconfiguration parameter including the destination BAP address of the second path, the path identifier of the second path and an identifier of a backhaul RLC channel from the child node to a next hop of node of the second path.

In at least one embodiment, the destination BAP address of the second path is a destination BAP address used for uplink F1-C and non-F1 data, and the path identifier of the second path is a path identifier used for the uplink F1-C and non-F1 data; or, the destination BAP address of the second path is a destination BAP address used for the uplink F1-U data, and the path identifier of the second path is a path identifier used for the uplink F1-U data.

In at least one embodiment, the backhaul RLC channel identifier to the next hop of node of the second path is:
an RLC channel identifier used for the uplink F1-C and non-F1 data, or, an RLC channel identifier used for the uplink F1-C data.

In at least one embodiment, in the case where the destination BAP address of the first path is unreachable due to the switching of the IAB-node to a new parent node, the path reconfiguration parameter is transmitted by an RRC reconfiguration message before the IAB-node is handed over, wherein after the second transceiving unit 1102 receives a handover success indication transmitted by the IAB-node after completing random access to the new parent node, the second processing unit 1101 triggers changing the routes of the first path data.

In at least one embodiment, in the case where the destination BAP address of the first path is unreachable due to the switching of the IAB-node to a new parent node, the path reconfiguration parameter may be transmitted from an F1AP message received from the donor-CU after the IAB-node completes handover, wherein,
the transmission of the first path data is stopped when the second transceiving unit 1102 receives a handover success indication transmitted by the IAB-node after completing random access to the new parent node,
and the second processing unit 1101 triggers routing change of the first path data when the second transceiving unit 1102 receives the F1AP message

In at least one embodiment, in the case where the situation where the destination BAP address of the first path of the IAB-node is unreachable due to radio link failure occurring in the link between the IAB-node and the first parent node, the path reconfiguration parameter is transmitted from the RRC reconfiguration message or F1AP message received from the donor-CU after the IAB-node completes reestablishment to the new parent node, wherein,
the second transceiving unit 1102 stops transmitting the first path data when it receives a reestablishment success indication transmitted by the IAB-node after completing random access to the new parent node,
and the second transceiving unit 1102 triggers routing change of the first path data after receiving the path reconfiguration parameter.

In at least one embodiment, in the case where the situation where the destination BAP address of the first path of the IAB-node is unreachable due to radio link failure occurring in the link between the IAB-node and the first parent node, the path reconfiguration parameter is transmitted from the F1AP message received from the donor-CU after the IAB-node reports radio link failure information to the donor-CU, wherein,
the second transceiving unit 1102 stops transmitting the first path data when it receives an RLF indication transmitted by the IAB-node when a radio link failure occurs in the link between the IAB-node and the first parent node,
and the second processing unit 1101 triggers routing change of the first path data when the second transceiving unit 1102 receives the F1AP message.

According to the embodiment of the fifth aspect of this disclosure, routing change is performed on the first path data, thereby transmitting the data based on the changed route, and avoiding loss of data.

### Embodiment of a sixth aspect

The embodiment of this disclosure provides an apparatus for transmitting and receiving a signal. The apparatus may be, for example, an integrated access and backhaul donor node centralized unit (IAB-donor CU), or may be one or some components of assemblies configured in the IAB-donor CU. The IAB-donor CU may be, for example, the donor-CU in FIG. 5, and the apparatus corresponds to the method in the embodiment of the third aspect.

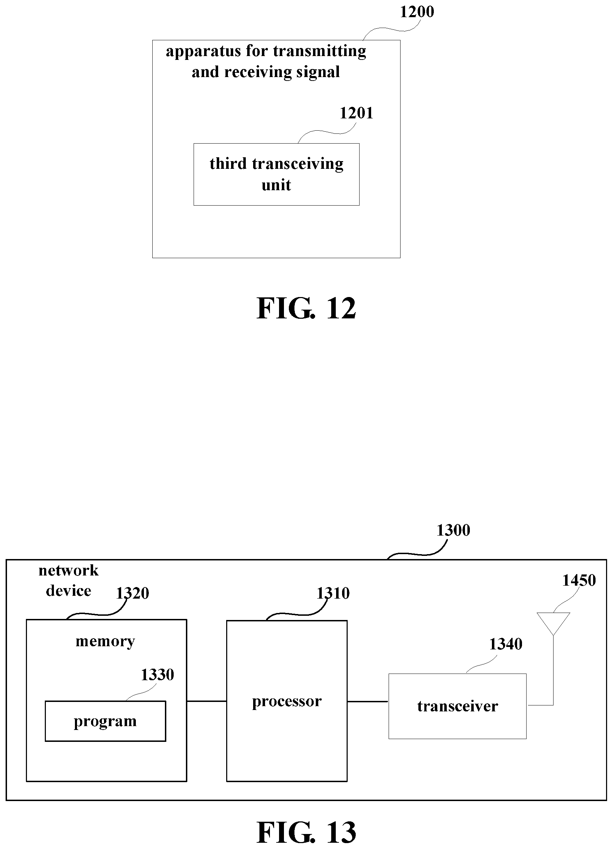

FIG. 12 is a schematic diagram of the apparatus for transmitting and receiving a signal of the embodiment of the fifth aspect of this disclosure. As shown in FIG. 12, an apparatus 1200 for transmitting and receiving a signal includes:
a third transceiving unit 1201 configured to, when a destination BAP address of a first path of the IAB-node is unreachable, transmit a path reconfiguration parameter to the IAB-node or a child node of the IAB-node, wherein the path reconfiguration parameter is used for the IAB-node or the child node to change routes of unsuccessfully transmitted first path data or received first path data.

In at least one embodiment, the path reconfiguration parameter includes a destination BAP address and path identifier of the first path.

In at least one embodiment, the path reconfiguration parameter includes mapping between the destination BAP address of the first path and a destination BAP address of the second path, or includes mapping between the destination BAP address and path identifier of the first path and the destination BAP address and path identifier of the second path.

In at least one embodiment, the situation where the destination BAP address of the first path of the IAB-node is unreachable includes that:
the destination BAP address of the first path is unreachable resulted after the IAB-node is handed over to a new parent node; or
the destination BAP address of the first path is unreachable resulted after radio link failure occurs in a link between the IAB-node and a first parent node.

In at least one embodiment, the path reconfiguration parameter includes the destination BAP address, the path identifier of the second path and identifier of a backhaul RLC channel from the IAB-node to a next hop of node of the second path.

In at least one embodiment, the destination BAP address of the second path is a destination BAP address used for uplink F1-C and non-F1 data, and the path ID of the second path is a path ID used for the uplink F1-C and non-F1 data, or,
the destination BAP address of the second path is a destination BAP address used for uplink F1-U data, and the path ID of the second path is a path ID used for the uplink F 1-U data.

In at least one embodiment, the identifier of the backhaul RLC channel to the next hop of node of the second path is:
an identifier of a backhaul RLC channel used for uplink F1-C and non-F 1 data, or an identifier of a backhaul RLC channel used for uplink F 1-U data.

In at least one embodiment, in the case where the destination BAP address of the first path is unreachable due to the switching of the IAB-node to a new parent node,
the third transceiving unit 1201 transmits an RRC reconfiguration message containing the path reconfiguration parameter to the IAB-node or the child node before the IAB-node is handed over, or,
the third transceiving unit 1201 transmits an F1 AP message containing the path reconfiguration parameter to the IAB-node or the child node after the IAB-node is handed over to the new parent node.

In at least one embodiment, in the case where the destination BAP address of the first path is unreachable due to a radio link failure occurring in the link between the IAB-node and the first parent node, the third transceiving unit 1201 transmits an RRC reconfiguration message or F1 AP message containing the path reconfiguration parameter to the IAB-node or the child node after the IAB-node complete completes reestablishment to a new parent node.

In at least one embodiment, in the case where the destination BAP address of the first path is unreachable due to a radio link failure occurring in the link between the IAB-node and the first parent node, the third transceiving unit 1201 transmits an RRC reconfiguration message or F1 AP message containing the path reconfiguration parameter to the IAB-node or the child node after the IAB-node reports radio link failure information to the donor-CU.

In at least one embodiment, in the case where the destination BAP address of the first path is unreachable due to a radio link failure occurring in the link between the IAB-node and the first parent node, the third transceiving unit 1201 transmits an RRC reconfiguration message containing the path reconfiguration parameter to the child node before the radio link failure occurs in the IAB-node.

According to the embodiment of the third aspect of this disclosure, the IAB-node or its child node may perform routing change on the first path data by using the routing reconfiguration parameter. Hence, the IAB-node or its child node may transmit the data based on the changed route, thereby avoiding loss of data.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

### Embodiment of a seventh aspect

The embodiment of this disclosure provides a communication system, and reference may be made to FIG. 1, with contents identical to those in the embodiments of the first to sixth aspects being not going to be described herein any further.

In some embodiments, the communication system may include:
an integrated access and backhaul donor centralized unit (IAB-donor CU) including the apparatus 1200 for transmitting and receiving a signal as described in the embodiment of the fourth aspect;
an integrated access and backhaul donor node including the apparatus 1000 for transmitting and receiving a signal as described in the embodiment of the fourth aspect; and
a child node including the apparatus 1100 for transmitting and receiving a signal as described in the embodiment of the fifth aspect.

An integrated access and backhaul node may include an IAB-MT functional unit and an IAB-DU functional unit, the IAB-MT functional unit having a structure identical to a terminal equipment, and the IAB-DU functional unit and the integrated access and backhaul donor centralized unit (IAB-donor CU) having a structure identical to a network device.

FIG. 13 is a schematic diagram of a structure of the network device of the embodiment of this disclosure. As shown in FIG. 13, the network device 1300 may include a processor 1310 (such as a central processing unit (CPU)) and a memory 1320, the memory 1320 being coupled to the processor 1310. The memory 1320 may store various data, and furthermore, it may store a program 1330 for information processing, and execute the program 1330 under control of the processor 1310.

For example, the processor 1310 may be configured to execute a program to carry out the method executed by the IAB-DU in the embodiment of the first aspect or the method executed by the IAB-donor DU in the embodiment of the second aspect.

Furthermore, as shown in FIG. 13, the network device 1300 may include a transceiver 1340, and an antenna 1350, etc. Functions of the above components are similar to those in the related art, and shall not be described herein any further. It should be noted that the network device 1300 does not necessarily include all the parts shown in FIG. 13, and furthermore, the network device 1300 may include parts not shown in FIG. 13, and the related art may be referred to.

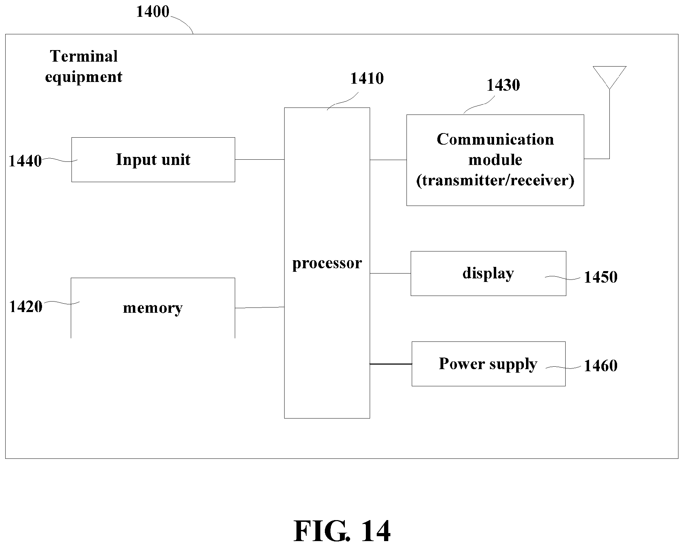

FIG. 14 is a schematic diagram of the terminal equipment in the embodiment of this disclosure. As shown in FIG. 14, the terminal equipment 1400 may include a processor 1410 and a memory 1420, the memory 1420 storing data and a program and being coupled to the processor 1410. It should be noted that this figure is illustrative only, and other types of structures may also be used, so as to supplement or replace this structure and achieve a telecommunications function or other functions. For example, the processor 1410 may be configured to execute a program to carry out the method executed by the IAB-MT in the embodiment of the first aspect.

As shown in FIG. 14, the terminal equipment 1400 may further include a communication module 1430, an input unit 1440, a display 1450, and a power supply 1460; wherein functions of the above components are similar to those in the related art, which shall not be described herein any further. It should be noted that the terminal equipment 1400 does not necessarily include all the parts shown in FIG. 14, and the above components are not necessary. Furthermore, the terminal equipment 1400 may include parts not shown in FIG. 14, and the related art may be referred to.

An embodiment of this disclosure provides a computer readable program, which, when executed in an IAB, causes the IAB to carry out the method for transmitting and receiving a signal as described in the embodiment of the first aspect.

An embodiment of this disclosure provides a computer storage medium, including a computer readable program, which causes an IAB to carry out the method for transmitting and receiving a signal as described in the embodiment of the first aspect.

An embodiment of this disclosure provides a computer readable program, which, when executed in a child node of an IAB-node, causes the child node to carry out the method as described in the embodiment of the second aspect.

An embodiment of this disclosure provides a computer storage medium, including a computer readable program, which causes a child node of an IAB-node to carry out the method as described in the embodiment of the second aspect.

An embodiment of this disclosure provides a computer readable program, which, when executed in a donor-CU, causes the donor-CU to carry out the method as described in the embodiment of the third aspect.

An embodiment of this disclosure provides a computer storage medium, including a computer readable program, which causes a donor-CU to carry out the method as described in the embodiment of the third aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.

A method at an IAB-node side:
1. A method for transmitting and receiving a signal, applicable to an integrated access and backhaul node (IAB-node), the method including:
   when a destination BAP address of a first path of the IAB-node is unreachable, changing routes of unsuccessfully transmitted first path data or received first path data; and
   based on the changed routes, transmitting the unsuccessfully transmitted first path data or received first path data.
2. The method according to supplement 1, wherein the changing routes of the first path data includes:
   changing a destination BAP address of the first path data into a destination BAP address of a second path, or
   changing a destination BAP address of the first path data into a destination BAP address of a second path, and changing a path ID of the first path data into a path ID of the second path.
3. The method according to supplement 2, wherein the transmitting the first path data includes:
   transmitting the first path data to a backhaul RLC channel between the IAB-node and a next hop of node of the second path.
4. The method according to supplement 3, wherein that a destination BAP address of a first path of the IAB-node is unreachable includes that:
   the destination BAP address of the first path of the IAB-node is unreachable due to the switching of the IAB-node to a new parent node, or
   the destination BAP address of the first path of the IAB-node is unreachable due to a radio link failure occurring in a link between the IAB-node and a first parent node.
5. The method according to supplement 4, wherein the method further includes:
   triggering start of a timer by the IAB-node after changing the routes of the first path data, and stopping changing the routes of the first path data after the timer expires, or
   stopping changing the routes of the first path data after the unsuccessfully transmitted first path data are transmitted by the IAB-node, or
   stopping changing the routes of the first path data after the unsuccessfully transmitted first path data are transmitted by the IAB-node and it is determined that the unsuccessfully transmitted first path data are transmitted by a downstream child node.
6. The method according to supplement 5, wherein,
   when the IAB-node receives an end indication transmitted by the downlink child node, the IAB-node determines that the downlink child node transmits the unsuccessfully transmitted first path data.
7. The method according to supplement 4, wherein in the case where the destination BAP address of the first path is unreachable due to a radio link failure occurring in a link between the IAB-node and a first parent node,
   the second path is a path passing a link between the IAB-node and a second parent node, wherein no radio link failure occurs in the link between the IAB-node and the second parent node.
8. The method according to supplement 7, wherein,
   after a radio link failure (RLF) occurs in the link between the IAB-node and the first parent node,
   the IAB-node is triggered to change the routes of the first path data.
9. The method according to supplement 4, wherein the method further includes:
   receiving, by the IAB-node, path reconfiguration parameters transmitted by the donor-CU, the path reconfiguration parameter including the destination BAP address and path ID of the first path.
10. The method according to supplement 4, wherein the method further includes:
   receiving, by the IAB-node, path reconfiguration parameters transmitted by the donor-CU, the path reconfiguration parameter including a mapping between the destination BAP address of the first path data and the destination BAP address of the second path, or including a mapping between the destination BAP address and the path ID of the first path data and the destination BAP address and the path ID of the second path.
11. The method according to supplement 4, wherein the method further includes:
   receiving, by the IAB-node, path reconfiguration parameters transmitted by the donor-CU, the path reconfiguration parameter including the destination BAP address of the second path, the path ID of the second path and an ID of a backhaul RLC channel between the IAB-node and a next hop of node of the second path.
12. The method according to supplement 11, wherein,
   the destination BAP address of the second path is a destination BAP address used for uplink F1-C and non-F1 data, and the path ID of the second path is a path ID used for the uplink F1-C and non-F1 data, or
   the destination BAP address of the second path is a destination BAP address used for uplink F1-U data, and the path ID of the second path is a path ID used for the uplink F1-U data.
13. The method according to supplement 11, wherein,
   an ID of the backhaul RLC channel to the next hop of node of the second path is:
   an ID of a backhaul RLC channel used for uplink F1-C and non-F1 data, or an ID of a backhaul RLC channel used for uplink F1-U data.
14. The method according to any one of supplements 9-11, wherein in the case where the destination BAP address of the first path is unreachable due to the switching of the IAB-node to a new parent node,
   the path reconfiguration parameter is transmitted by an RRC reconfiguration message transmitted by the donor-CU, and the method further includes: triggering changing the routes of the first path data by the IAB-node after completing random access to the new parent node.
15. The method according to any one of supplements 9-11, wherein in the case where the destination BAP address of the first path is unreachable due to the switching of the IAB-node to a new parent node,
   the path reconfiguration parameter is transmitted from an F1 AP message received by the donor-CU after the IAB-node completes reestablishment to the new parent node, wherein the method further includes:
   stopping transmission of the first path data when the IAB-node is handed over to the new parent node; and
   triggering changing the routes of the first path data after the IAB-node receives the F1 AP message.
16. The method according to any one of supplements 9-11, wherein in the case where the destination BAP address of the first path is unreachable due to a radio link failure occurring in a link between the IAB-node and a first parent node,
   the path reconfiguration parameter is transmitted from an RRC reconfiguration message or F1 AP message received by the donor-CU after the IAB-node completes reestablishment to the new parent node, and the method further includes:
   stopping transmission of the first path data when a radio link failure occurs in the link between the IAB-node and the first parent node; and
   triggering changing the routes of the first path data by the IAB-node after receiving the path reconfiguration parameter.
17. The method according to any one of supplements 9-11, wherein in the case where the destination BAP address of the first path is unreachable due to a radio link failure occurring in a link between the IAB-node and a first parent node,
   the path reconfiguration parameter is transmitted from an F1 AP message received by the donor-CU after the IAB-node reports radio link failure information to the donor-CU, wherein the method further includes:
   stopping transmission of the first path data when a radio link failure occurs in the link between the IAB-node and the first parent node; and
   triggering changing the routes of the first path data by the IAB-node after receiving the F1 AP message.

A method at a child node of an IAB-node side:
1. A method for transmitting and receiving a signal, applicable to a child node of an integrated access and backhaul node (IAB-node), the method including:
   when a destination BAP address of a first path of the IAB-node is unreachable, changing routes of unsuccessfully transmitted first path data or received first path data; and
   based on the changed routes, transmitting the unsuccessfully transmitted first path data or received first path data.
2. The method according to supplement 1, wherein the changing routes of the first path data includes:
   changing a destination BAP address of the first path data into a destination BAP address of a second path, or
   changing a destination BAP address of the first path data into a destination BAP address of a second path, and changing a path ID of the first path data into a path ID of the second path.
3. The method according to supplement 2, wherein the transmitting the first path data includes:
   transmitting the first path data to a backhaul RLC channel between the child node and a next hop of node of the second path.
4. The method according to supplement 3, wherein that a destination BAP address of a first path of the IAB-node is unreachable includes that:
   the destination BAP address of the first path of the IAB-node is unreachable due to the switching of the IAB-node to a new parent node, or
   the destination BAP address of the first path of the IAB-node is unreachable due to a radio link failure occurring in a link between the IAB-node and a first parent node.
5. The method according to supplement 4, wherein the method further includes:
   triggering start of a timer by the child node after changing the routes of the first path data, and stopping changing the routes of the first path data after the timer expires, or
   stopping changing the routes of the first path data after the unsuccessfully transmitted first path data are transmitted by the child node, or
   stopping changing the routes of the first path data after the unsuccessfully transmitted first path data are transmitted by the child node and it is determined that the unsuccessfully transmitted first path data are transmitted by a downstream child node.
6. The method according to supplement 5, wherein,
   when the child node receives an end indication transmitted by the downlink child node, the child node determines that the downlink child node transmits the unsuccessfully transmitted first path data.
7. The method according to supplement 4, wherein in the case where the destination BAP address of the first path is unreachable due to a radio link failure occurring in a link between the IAB-node and a first parent node,
   the second path is a path passing a link between the IAB-node and a second parent node, wherein no radio link failure occurs in the link between the IAB-node and the second parent node.
8. The method according to supplement 7, wherein,
   when the child node receives a radio link failure (RLF) indication transmitted when the radio link failure occurs in the link between the IAB-node and the first parent node, the child node is triggered to change the routes of the first path data.
9. The method according to supplement 8, wherein the RLF indication contains the destination BAP address and path ID of the first path.
10. The method according to supplement 4, wherein the method further includes:
   receiving, by the child node, path reconfiguration parameter transmitted by the donor-CU, the path reconfiguration parameter including the destination BAP address and path ID of the first path.
11. The method according to supplement 4, wherein the method further includes:
   receiving, by the child node, path reconfiguration parameter transmitted by the donor-CU, the path reconfiguration parameter including a mapping between the destination BAP address of the first path data and the destination BAP address of the second path, or including a mapping between the destination BAP address and the path ID of the first path data and the destination BAP address and the path ID of the second path.
12. The method according to supplement 4, wherein the method further includes:
   receiving, by the child node, path reconfiguration parameter transmitted by the donor-CU, the path reconfiguration parameter including the destination BAP address of the second path, the path ID of the second path and an ID of an backhaul RLC channel between the child node and the next hop of node of the second path.
13. The method according to supplement 12, wherein,
   the destination BAP address of the second path is a destination BAP address used for uplink F1-C and non-F1 data, and the path ID of the second path is a path ID used for the uplink F1-C and non-F1 data, or
   the destination BAP address of the second path is a destination BAP address used for uplink F1-U data, and the path ID of the second path is a path ID used for the uplink F1-U data.
14. The method according to supplement 12, wherein,
   an ID of the backhaul RLC channel to the next hop of node of the second path is:
   an ID of a backhaul RLC channel used for uplink F1-C and non-F1 data, or an ID of a backhaul RLC channel used for uplink F1-U data.
15. The method according to any one of supplements 10-12, wherein in the case where the destination BAP address of the first path is unreachable due to the switching of the IAB-node to a new parent node,
   the path reconfiguration parameter is transmitted by an RRC reconfiguration message before the IAB-node is handed over, wherein the method further includes: after the child node receives a handover success indication transmitted by the IAB-node after completing random access to the new parent node, triggering, by the child node, changing the routes of the first path data.
16. The method according to any one of supplements 10-12, wherein in the case where the destination BAP address of the first path is unreachable due to the switching of the IAB-node to a new parent node,
   the path reconfiguration parameter is transmitted from an F1 AP message received from the donor-CU after the IAB-node completes handover, wherein the method further includes:
   stopping transmission of the first path data when the child node receives a handover success indication transmitted by the IAB-node after completing random access to the new parent node; and
   triggering changing the routes of the first path data after the child node receives the F1 AP message.
17. The method according to any one of supplements 10-12, wherein in the case where the destination BAP address of the first path is unreachable due to a radio link failure occurring in the link between the IAB-node and the first parent node,
   the path reconfiguration parameter is transmitted by an RRC reconfiguration message transmitted by the donor-CU before the radio link failure occurs in the IAB-node, wherein the method further includes:
   triggering changing the routes of the first path data when the child node receives a reestablishment success indication transmitted by the IAB-node after completing random access to the new parent node.
18. The method according to any one of supplements 10-12, wherein in the case where the destination BAP address of the first path is unreachable due to a radio link failure occurring in the link between the IAB-node and the first parent node,
   the path reconfiguration parameter is transmitted from an RRC reconfiguration message or F1 AP message received from the donor-CU after the IAB-node completes reestablishment to the new parent node, and the method further includes:
   stopping transmission of the first path data when the child node receives a reestablishment success indication transmitted by the IAB-node after completing random access to the new parent node; and
   triggering changing the routes of the first path data by the child node after receiving the path reconfiguration parameter.
19. The method according to any one of supplements 10-12, wherein in the case where the destination BAP address of the first path is unreachable due to a radio link failure occurring in the link between the IAB-node and the first parent node,
   the path reconfiguration parameter is transmitted from an F1 AP message received from the donor-CU after the IAB-node reports radio link failure information to the donor-CU, wherein the method further includes:
   stopping transmission of the first path data when the child node receives an RLF indication transmitted when a radio link failure occurs in the link between the IAB-node and the first parent node; and
   triggering changing the routes of the first path data by the child node after receiving the F1 AP message.

A method at a donor-CU side:
1. A method for transmitting and receiving a signal, applicable to a donor central unit (donor-CU), the method including:
   when a destination BAP address of a first path of an IAB-node is unreachable, transmitting path reconfiguration parameter to the IAB-node or a child node of the IAB-node,
   wherein,
   the path reconfiguration parameter is used for the IAB-node or the child node to change routes of unsuccessfully transmitted first path data or received first path data.
2. The method according to supplement 1, wherein,
   the path reconfiguration parameter includes a destination BAP address and a path ID of the first path.
3. The method according to supplement 1, wherein,
   the path reconfiguration parameter includes a mapping between the destination BAP address of the first path data and the destination BAP address of the second path, or include a mapping between the destination BAP address and the path ID of the first path data and the destination BAP address and the path ID of the second path.
4. The method according to supplement 1, wherein that a destination BAP address of a first path of the IAB-node is unreachable includes that:
   the destination BAP address of the first path of the IAB-node is unreachable due to the switching of the IAB-node to a new parent node, or
   the destination BAP address of the first path of the IAB-node is unreachable due to a radio link failure occurring in a link between the IAB-node and a first parent node.
5. The method according to supplement 4, wherein,
   the path reconfiguration parameter includes the destination BAP address of the second path, the path ID of the second path and an ID of a backhaul RLC channel between the IAB-node and a next hop of node of the second path.
6. The method according to supplement 5, wherein,
   the destination BAP address of the second path is a destination BAP address used for uplink F1-C and non-F1 data, and the path ID of the second path is a path ID used for the uplink F1-C and non-F1 data, or
   the destination BAP address of the second path is a destination BAP address used for uplink F1-U data, and the path ID of the second path is a path ID used for the uplink F1-U data.
7. The method according to supplement 5, wherein,
   an ID of the backhaul RLC channel to the next hop of node of the second path is:
   an ID of a backhaul RLC channel used for uplink F1-C and non-F1 data, or an ID of a backhaul RLC channel used for uplink F1-U data.
8. The method according to supplement 5, wherein in the case where the destination BAP address of the first path is unreachable due to the switching of the IAB-node to a new parent node,
   the donor-CU transmits an RRC reconfiguration message containing the path reconfiguration parameter to the IAB-node or the child node before the IAB-node is handed over, or
   the donor-CU transmits an F1 AP message containing the path reconfiguration parameter to the IAB-node or the child node after the IAB-node is handed over to the new parent node.
9. The method according to supplement 5, wherein in the case where the destination BAP address of the first path is unreachable due to a radio link failure occurring in a link between the IAB-node and a first parent node,
   the donor-CU transmits an RRC reconfiguration message or F1 AP message containing the path reconfiguration parameter to the IAB-node or the child node after the IAB-node completes reestablishment to the new parent node.
10. The method according to supplement 5, wherein in the case where the destination BAP address of the first path is unreachable due to a radio link failure occurring in a link between the IAB-node and a first parent node,
   the donor-CU transmits an RRC reconfiguration message or F1 AP message containing the path reconfiguration parameter to the IAB-node or the child node after the IAB-node reports radio link failure information to the donor-CU.
11. The method according to supplement 5, wherein in the case where the destination BAP address of the first path is unreachable due to a radio link failure occurring in a link between the IAB-node and a first parent node,
   the donor-CU transmits an RRC reconfiguration message containing the path reconfiguration parameter to the child node before a radio link failure occurs in the IAB-node.

## Claims

1. An apparatus for transmitting and receiving a signal, applicable to an integrated access and backhaul node (IAB-node), the apparatus comprising:
a first processing unit configured to, when a destination backhaul adaptation protocol (BAP) address of a first path of the IAB-node is unreachable, change a route of unsuccessfully transmitted first path data or received first path data; and
a first transceiving unit configured to, based on the changed route, transmit the unsuccessfully transmitted first path data or received first path data.

2. The apparatus according to claim 1, wherein the changing route of the first path data comprises:
changing a destination BAP address of the first path data into a destination BAP address of a second path, or
changing a destination BAP address of the first path data into a destination BAP address of a second path, and changing a path ID of the first path data into a path ID of the second path.

3. The apparatus according to claim 2, wherein the transmitting the first path data comprises:
transmitting the first path data to a backhaul radio link control (RLC) channel between the IAB-node and a next hop of node of the second path.

4. The apparatus according to claim 3, wherein a destination BAP address of a first path of the IAB-node is unreachable comprises that:
the destination BAP address of the first path of the IAB-node is unreachable due to the switching of the IAB-node to a new parent node, or
the destination BAP address of the first path of the IAB-node is unreachable due to a radio link failure occurring in a link between the IAB-node and a first parent node.

5. The apparatus according to claim 4, wherein the first processing unit is further configured to perform the following operations:
triggering start of a timer after changing the route of the first path data, and stopping changing the route of the first path data after the timer expires, or
stopping changing the route of the first path data after the unsuccessfully transmitted first path data are transmitted, or
stopping changing the route of the first path data when the unsuccessfully transmitted first path data are transmitted and it is determined that the unsuccessfully transmitted first path data are transmitted by a downstream child node.

6. The apparatus according to claim 5, wherein,
when the IAB-node receives an end indication transmitted by the downlink child node, the first processing unit determines that the downlink child node transmits the unsuccessfully transmitted first path data.

7. The apparatus according to claim 4, wherein,
the first transceiving unit further receives a path reconfiguration parameter transmitted by a Donor-CU, the path reconfiguration parameter comprising a mapping between the destination BAP address of the first path and the destination BAP address of the second path, or comprising a mapping between the destination BAP address and a path ID of the first path and the destination BAP address and the path ID of the second path.

8. The apparatus according to claim 4, wherein,
the first transceiving unit further receives path reconfiguration parameter transmitted by a Donor-CU, the path reconfiguration parameter comprising the destination BAP address of the second path, the path ID of the second path and an ID of the backhaul RLC channel between the IAB-node and the next hop of node of the second path.

9. The apparatus according to claim 8, wherein,
the destination BAP address of the second path is a destination BAP address used for uplink F1-C and non-F1 data, and the path ID of the second path is a path ID used for the uplink F1-C and non-F1 data, or
the destination BAP address of the second path is a destination BAP address used for uplink F1-U data, and the path ID of the second path is a path ID used for the uplink F1-U data.

10. The apparatus according to claim 7, wherein in the case where the destination BAP address of the first path is unreachable due to a radio link failure occurring in a link between the IAB-node and a first parent node,
the path reconfiguration parameter is transmitted through an RRC reconfiguration message or F1 AP message received from the donor-CU after the IAB-node completes reestablishment to a new parent node,
wherein,
transmission of the first path data is stopped when a radio link failure occurs in the link between the IAB-node and the first parent node,
and after the first transceiving unit receives the path reconfiguration parameter, the first processing unit triggers changing the route of the first path data.

11. An apparatus for transmitting and receiving a signal, applicable to a child node of an integrated access and backhaul node (IAB-node), the apparatus comprising:
a second processing unit configured to, when a destination BAP address of a first path of the IAB-node is unreachable, change a route of unsuccessfully transmitted first path data or received first path data; and
a second transceiving unit configured to, based on the changed route, transmit the unsuccessfully transmitted first path data or received first path data.

12. The apparatus according to claim 11, wherein the changing route of the first path data comprises:
changing a destination BAP address of the first path data into a destination BAP address of a second path, or
changing a destination BAP address of the first path data into a destination BAP address of a second path, and changing a path ID of the first path data into a path ID of the second path.

13. The apparatus according to claim 12, wherein the transmitting the first path data comprises:
transmitting the first path data to a backhaul RLC channel between the child node and a next hop of node of the second path.

14. The apparatus according to claim 13, wherein a destination BAP address of a first path of the IAB-node is unreachable comprises that:
the destination BAP address of the first path of the IAB-node is unreachable due to the switching of the IAB-node to a new parent node, or
the destination BAP address of the first path of the IAB-node is unreachable due to a radio link failure occurring in a link between the IAB-node and a first parent node.

15. The apparatus according to claim 14, wherein the second processing unit is further configured to perform the following operations:
triggering start of a timer after changing the route of the first path data, and stopping changing the route of the first path data after the timer expires, or
stopping changing the route of the first path data after the unsuccessfully transmitted first path data are transmitted, or
stopping changing the routes of the first path data in the case that the unsuccessfully transmitted first path data are transmitted and it is determined that the unsuccessfully transmitted first path data are transmitted by a downstream child node.

16. The apparatus according to claim 14, wherein in the case where the destination BAP address of the first path is unreachable due to a radio link failure occurring in a link between the IAB-node and a first parent node,
the second path is a path passing a link between the IAB-node and a second parent node, wherein no radio link failure occurs in the link between the IAB-node and the second parent node.

17. The apparatus according to claim 16, wherein,
when the second transceiving unit receives a radio link failure (RLF) indication transmitted when the radio link failure occurs in the link between the IAB-node and the first parent node, the second processing unit triggers the child node to change the route of the first path data.

18. The apparatus according to claim 17, wherein the RLF indication contains the destination BAP address and path ID of the first path.

19. The apparatus according to claim 14, wherein,
the second transceiving unit further receives path reconfiguration parameter transmitted by a donor-CU, the path reconfiguration parameter comprising the destination BAP address and path ID of the first path.

20. The apparatus according to claim 19, wherein in the case where the destination BAP address of the first path is unreachable due to the switching of the IAB-node to a new parent node,
the path reconfiguration parameter is transmitted by an RRC reconfiguration message before the IAB-node is switched, wherein when the second transceiving unit receives a switch success indication transmitted by the IAB-node after the IAB-node completes random access to the new parent node, the second processing unit triggers changing the route of the first path data.
